# EUROPEAN PATENT SPECIFICATION

(11) **EP 1 597 839 B1**
(45) Date of publication and mention of the grant of the patent: **15.08.2007**
(21) Application number: 03716225.2
(22) Date of filing: 26.02.2003
(51) Int. Cl.: H04B 7/15

(54) **CELLULAR SIGNAL ENHANCER**
ZELLSIGNALVERSTÄRKER
REHAUSSEUR DE SIGNAL CELLULAIRE

(43) Date of publication of application: 23.11.2005
(73) Proprietor: ANDREW CORPORATION, Norcross, GA 30071 (US)
(72) Inventor: MCKAY, David, L., Duluth, GA 30097 (US); RUNYON, Donald, L., Duluth, GA 30097 (US); MCNEILL, Donald, Joseph, Sugar Hill, GA 30518 (US); THOMPSON, Stephen, Brett, Norcross, GA 30092 (US); MAXWELL, James, William, Atlanta, GA 30350-5413 (US)
(74) Representative: Hill, Justin John
(86) International application number: PCT/US2003/006056
(87) International publication number: WO 2004/079946

(56) References cited:
- WO-A-98/39851
- WO-A-98/39856
- WO-A-99/29051
- DE-C1- 19 756 050
- US-A- 6 032 020
- US-A1- 2001 038 670

## Description

### TECHNICAL FIELD

The present invention is directed generally to wireless communications and, more particularly, to extending service coverage for a subscriber unit by enhancing the signal received (or transmitted) by the subscriber unit in an area of limited coverage.

### BACKGROUND OF THE INVENTION

Wireless communication systems have become widespread and the user population has become increasingly reliant and demanding of the availability of wireless communications. Many users rely on the wireless communication capability without regard to the availability of landline telephone service. These wireless communication systems can be for communicating voice and/or data between services and subscribers or users. As many of these systems now rely on digital formats for communication the distinction between voice and digital transmissions is one principally demarked by information rate. Although the service coverage of the wireless communication systems has been expanded at a rapid rate, there remain various areas of limited coverage. Each of the wireless communication systems typically includes multiple base stations for transmitting wireless signals to the user's subscriber unit and receiving wireless signal transmissions from the user's subscriber unit. These communication systems include, by way of example, cellular transmissions operating at approximately 800 MHz, Personal Communication Services (PCS) transmissions operating at approximately 1900 MHz in the United States (US) and other wireless and mobile communication applications worldwide.

Each of the fixed location base stations has one or more coverage areas, typically called a cell. A mobile user having a subscriber unit, for example, a cellular phone, can receive signals from the base station and transmit signals to the base station. A mobile user can use other types of portable subscriber units, such as a relatively small computer known in the industry as a personal digital assistant (PDA) or a larger portable computer known in the industry as a laptop computer, having the capability to communicate through wireless means to a base station. The signal coverage is typically best within the defined coverage area but can be blocked or weak even within the coverage area. As is well known, the coverage area may include locations shadowed by a hill or other structure, may leave areas at the edge of the cell, between cells or beyond the cell area where the signal reception is intermittent or non-existent to the user. For example, the coverage area can include buildings and the signal coverage inside the building space is generally less than the exterior space near the building due to signal attenuation and scattering of the signal penetrating and propagating within the building structure. It also may be desirable to extend the coverage of the base station to a particular user location, which does not justify, at least currently, the construction of another base station or permanent repeater to extend the coverage to that location.

So-called "repeater" units have been designed to provide one solution to the desired extended coverage and generally are located on towers in permanent locations. These repeaters operate by receiving the transmitted signal from the base station on a first or donor antenna and then reradiating or retransmitting an amplified signal from a second or server antenna to the user. The user's transmissions are received by the server antenna, amplified and then retransmitted to the base station by the donor antenna. The repeater can be used to extend the base station coverage to an area beyond the normal cell coverage area or to provide a sufficient signal into a shadowed location in the cell coverage area to provide the user with the desired coverage. Outdoor repeaters are typically placed in fixed locations, such as mini-cell towers, are relatively expensive to install, and are generally not installed by a user.

Single repeater units or subsystems consisting of one or more repeater units and a signal distribution network of optical fiber or coaxial cable can be designated specifically for providing coverage interior to a building or other structure such as a tunnel. These repeaters generally have a single donor antenna outside the structure being covered and one or more server antennas located within the structure.

In operation, a repeater generates a finite amount of transmitted energy, which is fed back or coupled to the respective first and second antennas. The isolation between the first and second repeater antennas generally can be defined as the measure of the retransmission output power to the coupled input power, generally expressed in decibel (dB) units. Since feedback or coupled interference exists in the repeaters, there exists the possibility of unstable operation producing oscillation under certain conditions. To prevent an unstable condition from occurring in the repeaters, the signal amplitude gain of the repeater cannot be more than the isolation between the two repeater antennas.

Outdoor repeaters typically have amplifier gain values on the order of eighty-five (85) to ninety-five (95) dB and may have donor antenna gain values on the order of twenty-three (23) to twenty-five (25) dBi and server antenna gain values on the order of fifteen (15) to eighteen (18) dBi. The corresponding net signal gain and minimum isolation for these ranges of gain values is one hundred and twenty-three (123) to one hundred and thirty-eight (138) dB. The composite radio frequency (RF) output power limit of current typical equipment can be plus twenty (+20) dBm on the donor side and plus forty-three (+43) dBm on the server side.

The typical outdoor repeater provides operational gain for a subsection of the frequency allocation in the cellular or PCS services. The use of a subsection of the frequency allocation can limit the operations of the repeater to a subset of service providers having licenses within a particular service zone. This limitation can result in a need for additional equipment and real estate for providing coverage to mobile users.

It is clear that a repeater on the downlink path must provide a signal amplitude to the user's subscriber unit that is greater than the signal amplitude arriving to that subscriber unit without the repeater present, in order for there to be any benefit to the user. There is a minimum net signal gain that must be provided by the repeater in order to provide any benefit. The net signal gain must overcome the effective signal losses of reception and retransmission of a wave propagating in the environment in contrast to the propagation loss of the original signal. Hence, a passive repeater having no active or electronic signal gain and relying solely on antenna gain will not provide a benefit in an outdoor environment. The active gain can be greater than seventy (70) dB in an outdoor environment where the repeater signal coverage extension is often more than one (1) mile distance.

The requirement for outdoor repeaters to extend wireless signal coverage below ten (10) GHz results in the use of relatively large antennas and the use of relatively expensive electronics, requires ownership or leasing of real property, and requires a mounting structure that can be a tower or building. These expenses are typically borne in some way by the service provider either through direct ownership or through leasing.

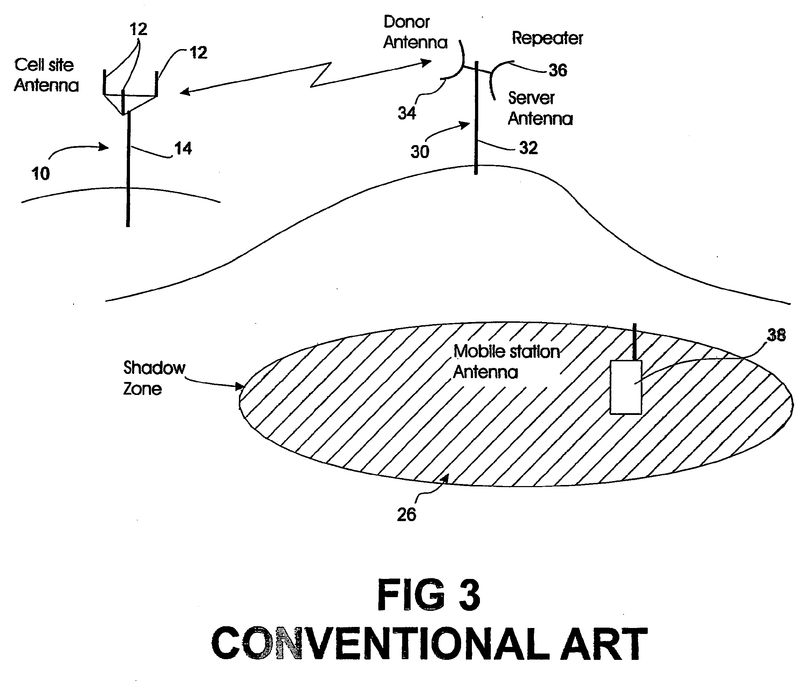

Extending signal coverage to an area of insufficient coverage, such as into a building for the user can incur problems, since the redistribution requires significant high gain, which in turn can cause instability potentially leading to oscillations and/or undesirable noise within the communication system. Further, the user may be at a location temporarily and, in any case, the user would like to obtain coverage extension wherever possible without significant setup or installation costs or services. As will be described in more detail below in connection with Figs. 3-13, conventional "personal" repeaters have attempted to address this signal coverage extension issue, with limited success to date in the marketplace.

The document WO 98/39856 A (CELLETRA LTD; SHAPIRA, JOSEPH) discloses a signal enhancer comprising: a bi-directional amplifier comprising an amplifying downlink signal path for generating an amplified base station signal in response to a base signal and an amplifying uplink signal path for generating an amplified user signal in response to a user signal from the wireless communications device; a donor dual polarized antenna, coupled to the bi-directional amplifier, comprising a first donor polarized portion having a first polarization state and a second donor polarized portion having a second polarization state orthogonal to the first polarization state; and a server dual polarized antenna, coupled to the bi-directional amplifier, comprising a first server polarized portion having the second polarization state and a second server polarized portion having the first polarization state, wherein the downlink signal path is coupled between the first donor polarized portion and the second server polarized portion; and wherein the uplink signal path is coupled between the second donor polarized portion and the first server polarized portion.

In view of the foregoing, it can be seen that a need exists for extending user coverage for base station applications, which can be obtained with a reduced cost and simplicity of utilization by the user. It also is desirable to provide portable, low cost, enhanced area coverage, which can be individually located as desired by the user. There is a further need to provide extended user coverage in a manner that does not result in signal instability that would generate oscillations or interference in the wireless communications system.

### SUMMARY OF THE INVENTION

The present invention is directed to extending service coverage of wireless communications to a subscriber unit, such as a cellular telephone or other type of wireless communications device, by enhancing the signal received by the unit in the desired area of limited coverage. For example, the enhancement is the increase of signal power levels to allow cellular telephone usage where the original cellular signals are weak and the area or space that may benefit from improved coverage is relatively small compared to the coverage of a macro base station. Locations needing extended service coverage can be in an indoor environment such as a residence, small office, or home office environment or in local outdoor environment such as a venue for a special event.

For one aspect of the present invention, the wireless base station signal can be actively enhanced by a bi-directional amplifier, which receives a base station signal, amplifies the signal power and retransmits the amplified signal via a downlink signal path to the user's subscriber unit in close proximity. The bi-directional amplifier, commonly referred to as a BDA, also receives a user signal, amplifies the signal power and retransmits the amplified signal via a second uplink signal path to the base station.

The BDA can provide bi-directional operation over the complete frequency allocation for a particular wireless communication service and can operate with one or more simultaneous users; each user typically has a subscriber unit or terminal where the system access protocol can be different among multiple users. For example, the bi-directional operation for the BDA can include the entire licensed US PCS frequency spectrum and can operate cooperatively with one or more simultaneous users having CDMA, GSM or IS-136 system access protocols.

The BDA can be coupled between a "donor" dual polarized antenna and a "server" dual polarized antenna. The donor dual polarized antenna can (1) receive the base station signal for delivery to the downlink signal path and (2) transmit an amplified version of a user signal to the base station in response to receipt of that amplified signal from the uplink signal path. The server dual polarized antenna can (1) receive the user signal for delivery to the uplink signal path and (2) transmit an amplified version of the base station signal to the user's subscriber unit in response to receipt of that amplified signal from the downlink signal path. Thus, the BDA can carry uplink and downlink path signals between the donor and server antennas.

The BDA is typically contained in a single user portable unit having a housing with a size and weight that supports a user's movement of the portable unit from one location to another location. For a representative aspect of the present invention, the donor and server dual polarized antennas can be mounted to opposing surfaces of the housing for the portable unit. This allows an antenna mounted on one surface of the housing to radiate energy in a direction opposite to that of the antenna mounted to the other surface. The dual polarized antennas can receive and transmit the respective uplink and downlink signals using orthogonal polarizations to increase isolation of the signals.

To support operation of a portable unit in varying locations, based on the movement of that unit by the user, the portable unit can include an automated setup or initialization routine that supports variable gain control for the BDA. In response to applying electrical power to the unit from an un-powered state, this variable gain control system can increase the signal amplitude gain on both downlink and uplink paths for the BDA until one of a predetermined operating signal level is achieved or a maximum predetermined signal amplitude gain level is received on the downlink signal path. Once an initialization state is reached, the variable gain control system can monitor and adjust the output power level of the downlink and uplink paths of the BDA to maintain the initialization operating levels.

For another aspect of the present invention, a portable signal enhancer comprises a housing having a pair of oppositely facing surfaces and a dual polarized antenna mounted to each of the surfaces for radiating energy in a direction opposite to that of the antenna mounted to the other surface. Each dual polarization antenna can comprise a first antenna element having a first polarization state and a second antenna element having a second polarization state. The first polarization state is different from the second polarization state to achieve a separation of signals received by the first antenna element and output by the second antenna element.

This signal enhancer also comprises a BDA, mounted within the housing, for amplifying signals carried on a downlink signal path extending between the dual polarized antennas on each of the pair of oppositely facing surfaces of the housing. This BDA can also amplify signals carried on an uplink signal path extending between the dual polarized antennas on each of the pair of oppositely facing surfaces of the housing.

The downlink signal path and the uplink signal path typically comprise a downlink filter and an uplink filter, respectively, for defining full bandwidth signal paths for the BDA. Both the downlink filter and the uplink filter comprise signal delay optimization characteristics to minimize group delay in these signal paths.

Other features and advantages of the present invention will be readily appreciated upon review of the following detailed description when taken in conjunction with the accompanying drawing figures.

### BRIEF DESCRIPTION OF THE DRAWINGS

Fig. 1 is an illustration of the wireless communication coverage in a representative base station environment.
Fig. 2 is an illustration of a limitation in the communication coverage in a base station environment.
Fig. 3 is an illustration of one conventional solution for a limited signal coverage area for the base station illustrated in Fig. 1.
Fig. 4 is an illustration of another conventional solution for limited signal coverage for the base station illustrated in Fig. 1.
Fig. 5 is an illustration of a further conventional solution for limited signal coverage for the base station illustrated in Fig. 1.
Fig. 6 is a block diagram of a conventional repeater solution for a base station having limited signal coverage.
Fig. 7 is a block diagram of a conventional coupled interference cancellation repeater solution for a base station having limited coverage.
Fig. 8 is a block diagram of a conventional adaptive cancellation repeater solution for a base station having limited coverage.
Fig. 9 is a block diagram of a downlink path of the conventional adaptive cancellation repeater solution of Fig. 8.
Fig. 10 is a block diagram of an uplink path of the conventional adaptive cancellation repeater solution of Fig. 8.
Fig. 11 is a block diagram of another conventional adaptive cancellation repeater solution for a base station having limited coverage.
Fig. 12 is a perspective illustration of one flat panel module of the conventional adaptive cancellation repeater solution of Fig. 8.
Fig. 13 is a perspective illustration of another flat panel module of the conventional adaptive cancellation repeater solution of Fig. 11.
Fig. 14 is an illustration of the representative communication coverage of an exemplary embodiment of the present invention.
Fig. 15 is an illustration of the representative communication coverage of another exemplary embodiment of the present invention.
Fig. 16 is a block diagram of an exemplary embodiment of the present invention.
Fig. 17 is a perspective view of a flat panel exemplary embodiment of the present invention.
Fig. 18 is a diagram illustrating the frequency spectrum of a representative base station.
Fig. 19 is a detailed block diagram of an exemplary embodiment of the present invention.
Fig. 20 is a state diagram illustrating operations of the exemplary embodiment of Fig. 19.
Fig. 21 is a timing diagram of the initial gain control setting of the exemplary embodiment of Fig. 19.
Fig. 22 is a flow chart illustrating a method for operating the exemplary embodiment of Fig. 19.
Fig. 23 is a timing diagram illustrating operations of the exemplary embodiment of Fig. 19.
Fig. 24 is a partial perspective view of a building with an exemplary enhancer unit located therein.
Fig. 25 is an enlarged perspective view of an enhancer unit constructed in accordance with an exemplary embodiment of the present invention.
Fig. 26 is an exploded perspective view of part of the exemplary enhancer unit of Fig. 25.
Fig. 27 is another exploded perspective view of the partially assembled exemplary enhancer unit of Fig. 25.
Fig. 28 is another perspective view of the exemplary enhancer unit of Fig. 25 with a mounting stand for the unit.
Figs. 29A, 29B and 29C are respective front plan, side and top views of the exemplary enhancer unit of Fig. 25.
Fig. 30 is a sectional view of the exemplary enhancer unit of Fig. 29A taken along the line 30-30 therein.
Fig. 31 is a sectional view of the exemplary enhancer unit of Fig. 29A taken along the line 31-31 therein.
Fig. 32 is a sectional view of the enhancer unit and mounting stand of Fig. 29A taken along the line 32-32 therein, each constructed in accordance with an exemplary embodiment of the present invention.
Fig. 33 is an enlarged sectional view of a portion of the exemplary mounting stand of Fig. 32.
Fig. 34 is an enlarged sectional view of a portion of the exemplary enhancer unit of Fig. 30.
Fig. 35 is another perspective view of the exemplary enhancer unit of Fig. 25 with an alternative mounting stand for the unit.
Fig. 36 is a plan view of a server dual polarized antenna constructed in accordance with an exemplary embodiment of the present invention.
Fig. 37 is a plan view of a donor dual polarized antenna constructed in accordance with an exemplary embodiment of the present invention.
Fig. 38 is a partial perspective view of a building with an alternative exemplary enhancer unit having a detachable sub-unit located therein.
Fig. 39 is an enlarged perspective view of the alternative exemplary enhancer unit illustrated in Fig. 38.

### DETAILED DESCRIPTION OF THE EXEMPLARY EMBODIMENTS

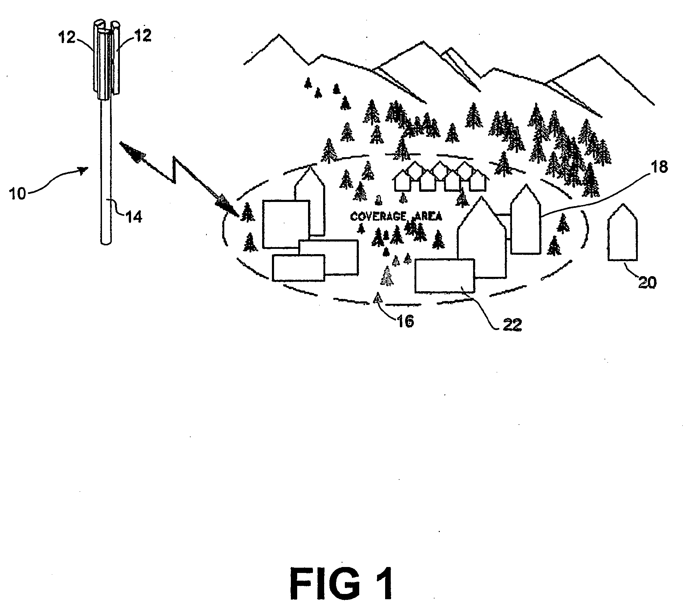

For the description to follow, the same reference numerals are utilized in the Figures to refer to the same or similar components in the drawings. Referring now to Fig. 1, a base station or cell site 10 includes at least one and typically multiple antennas 12, which radiate and receive radio frequency signals to support wireless communications. The antennas or antenna arrays 12 are mounted in a conventional manner on a base station tower 14 or similar functioning structure such as a building. As utilized herein, an antenna array is an assembly of antenna elements with dimensions, spacing, and illumination sequence such that the fields for the individual radiator elements combine to produce a maximum intensity in a particular direction and minimum field intensities in other directions. The term array antenna can be used interchangeably with antenna array in describing such an assembly.

Each of the base station antenna arrays 12 provides coverage to a cell of a mobile or fixed communication system (not illustrated), such as for cellular transmissions operating at approximately 800 MHz, Personal Communication Services (PCS) transmissions operating at approximately 1900 MHz in the United States (US) or other wireless communication applications with fixed or mobile users of the system, such as within one or more coverage areas 16. The coverage of the base station 10 may not include all of the coverage area 16. For example, a structure or building may interfere with the signal strength at a building 18, illustrated as being on the periphery of the coverage area 16, but which could be most anywhere in the coverage area 16. Sufficient signal strength may be available, however, for signal enhancement to support the delivery of communications services to the user. Another service coverage problem can be the service available to the user within a structure or building 22, even though the building is within the coverage area 16. This can be caused by any number of problems, such as the construction of the building 22 or other sources of blockage or multi-path signal interference, which can again cause the signal strength to be insufficient for use by the user without enhancement of the signal.

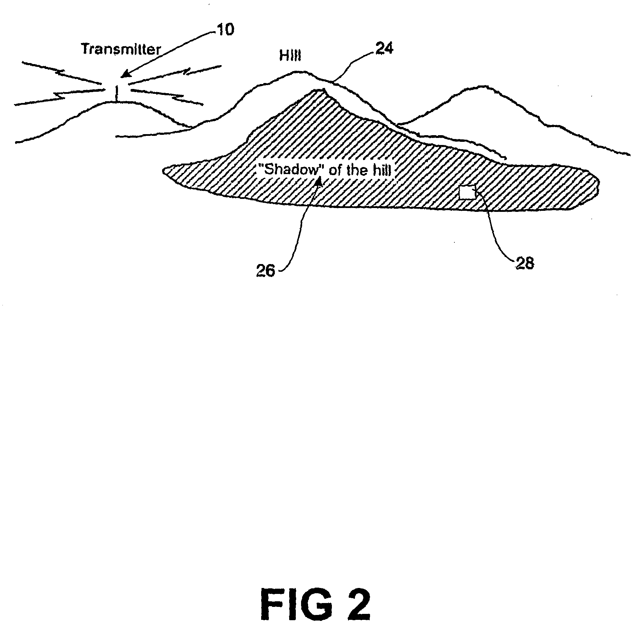

Another limitation on the service coverage of the base station 10 is the interference by natural or manmade structures, such as a hill or mountain 24, as illustrated in Fig. 2. The hill 24 causes interference with the signal radiated from the base station 10 in an area 26, called shadowing. The signal which reaches the shadow area 26 again will not be sufficient for use by a user, such as in a building or location 28, without enhancement of the base station signal.

One solution to providing sufficient signal coverage in the shadow area or zone 26 is illustrated in Fig. 3. A repeater 30 generally is mounted on a tower 32 or similar functioning structure. The tower is typically positioned either in the cell coverage area of the base station 10 or close enough that the signal strength received on a donor antenna 34 is sufficient to be amplified and retransmitted by a reradiation or server antenna 36 to a mobile station 38, such as a cellular phone in the shadow zone 26. The mobile station 38, also described as a subscriber unit or terminal, can be inside a building (not illustrated) within the zone or can be a location within the zone 26.

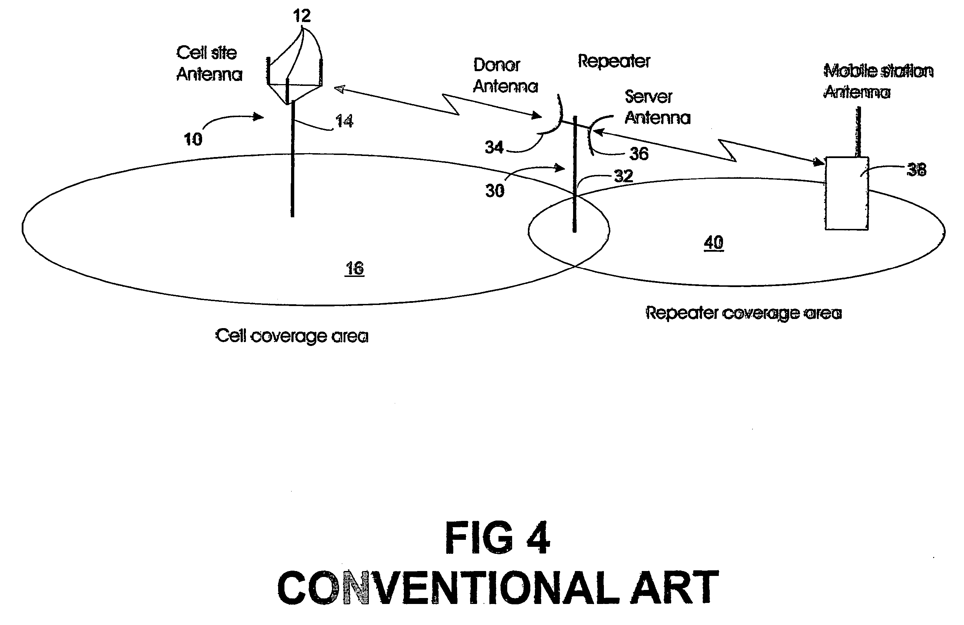

Another solution for the communication problem of the limited cell coverage area 16 is illustrated in Fig. 4. Again, the repeater 30 is located either at the edge of the coverage area 16, as illustrated, or outside the area 16, but where the signal from the base station 10 is sufficient to be amplified for retransmission. Here, an area 40 of desired coverage is not a shadow area but is wholly or partially beyond the coverage area 16. The area 40 can be selected to cover any permanent location of the user or users, such as the building or location 20 in Fig. 1.

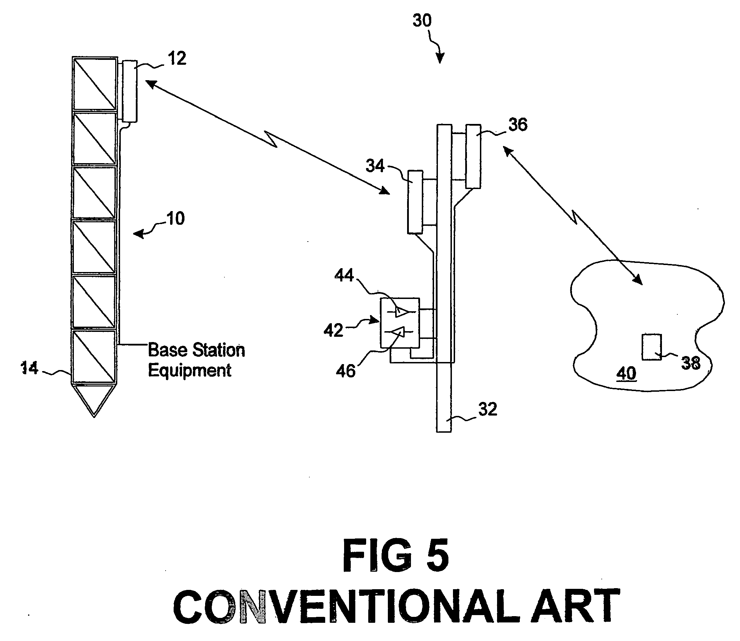

As illustrated in Fig. 5, the repeater 30 generally is mounted on the tower 32 in a fixed location. The donor antenna 34 faces the base station 10 and generally is physically isolated from the server antenna 36, by being spaced away from one another along the length of the tower 32. The repeater 30 requires electronics 42 to amplify and retransmit the signals to and from the user station 38. The electronics 42 include at least a pair of amplifiers 44 and 46, one to amplify the downlink signal from the base station 10 and one to amplify the uplink signal from the user station 38.

The conventional solution for extending service coverage, as illustrated in Fig. 4 and 5, generally involves extending the service coverage to a relatively wide area of coverage. In contrast, exemplary embodiments of the present invention, as described below, provide signal enhancement in a comparatively more confined area or space that is typically indoors and has a coverage area of typically up to five thousand (5,000) square feet based on the use of a single, portable signal enhancement unit.

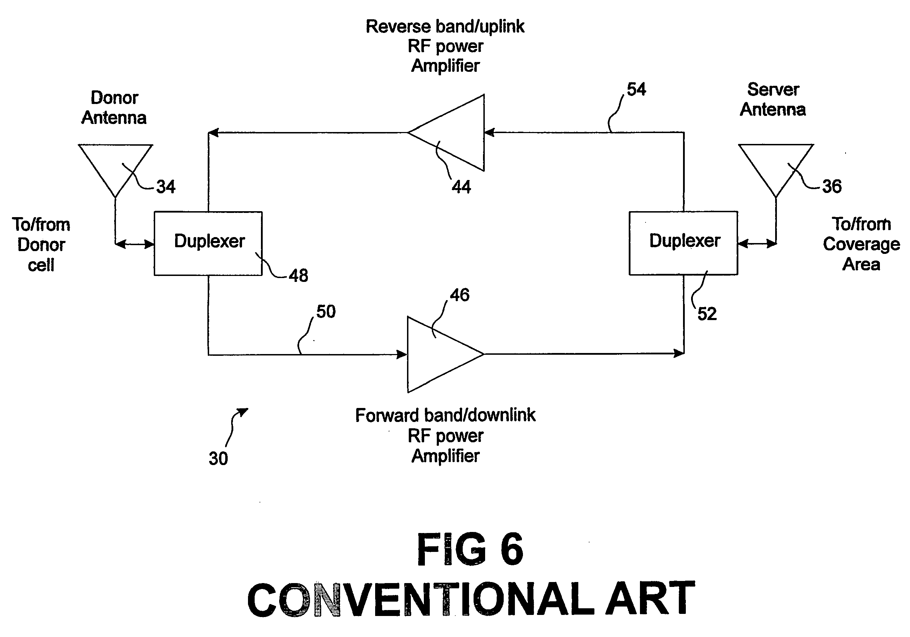

A block diagram of a conventional repeater 30 is illustrated in Fig. 6. The repeater 30 includes the donor antenna 34, which-couples a downlink signal from the base station 10 through a duplexer filter 48 into a forward band or downlink path 50. The downlink signal can be, for example, in the frequency band of 1930 to 1990 MHz. The downlink signal is amplified by the amplifier 46 and then coupled through a duplexer filter 52 to the server antenna 36 for transmission to the user. Transmission signals from the user are received by the server antenna 36 and coupled through the duplexer filter 52 into a reverse band or uplink path 54. The uplink signal can be, for example, in the frequency band of 1850 to 1910 MHz, separated from the downlink signal frequency band by 20 MHz for isolation between the signals. The uplink signal is amplified by the amplifier 44 and then coupled through the duplexer filter 48 to the donor antenna 34 for transmission to the base station 10.

The conventional repeater 30 illustrated in Fig. 6 uses duplexer filters 48 and 52 to separate the uplink 54 and downlink 50 path signals for amplification. The conventional repeater 30 uses a single donor antenna and a single server antenna and each antenna has a single characteristic polarization for reception and transmission of signals. In contrast, exemplary embodiments of the present invention do not use duplexer filters 48 and 52. As described in more detail below, these exemplary embodiments typically use a single donor antenna and single server antenna, where each antenna has two characteristic polarizations: one characteristic polarization for reception of signals and one characteristic polarization for transmission of signals. Further, the characteristic polarization used for transmission of signals from the donor antenna is not the same as the characteristic polarization for reception of signals by the server antenna. Similarly, the characteristic polarization used for reception of signals by the donor antenna is not the same as the characteristic polarization for transmission of signals from the server antenna.

One of ordinary skill in the art will recognize that the aforementioned scenarios for coverage enhancement and coverage extension for communications can be for two-way communications and the description of service coverage can apply to the signal conditions for uplink signals as well as for downlink signals. One of ordinary skill in the art also will recognize that imbalances in the communication link design or local propagation conditions can result in temporary or long-term imbalances in the up and down communication links that favor one signal path more than the other. Therefore, a repeater may operatively improve the signal coverage on one of the links or bi-directionally on both links.

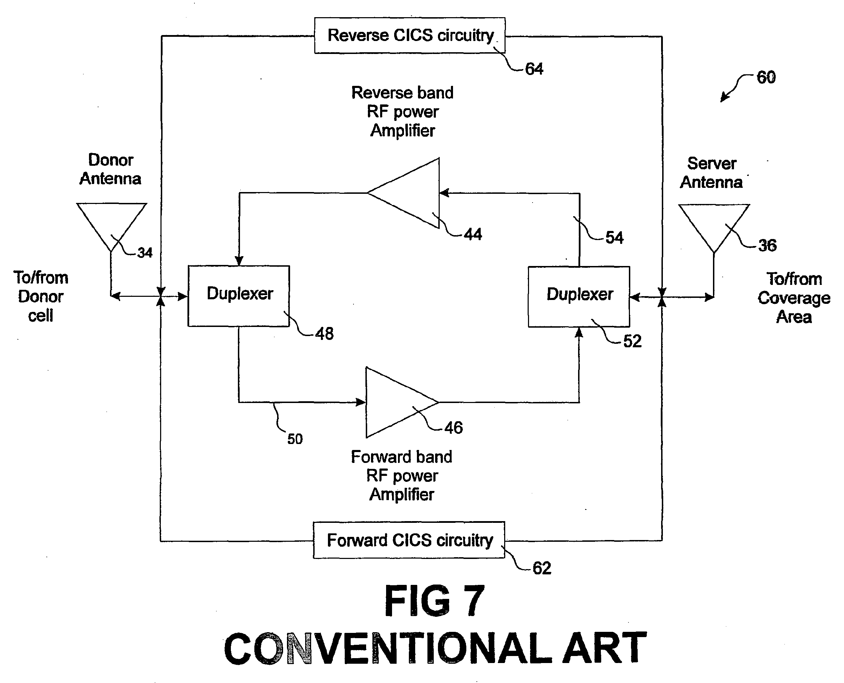

Referring to Fig. 7, a conventional coupled interference cancellation system (CICS) repeater 60 is illustrated, such as described in US Patent No. 6,385,435 B1. In addition to the elements described with respect to the repeater 30, the repeater 60 provides circuitry to reduce the feedback or coupled interference signals in the repeater 30. The repeater 60 includes a downlink or forward CICS circuitry block 62 and an uplink or reverse CICS circuitry block 64. The CICS circuitry blocks 62 and 64 are not shown in any detail, but each includes a pilot signal generator and detector, which are utilized to detect the presence and amplitude of the respective interference signal and to inject a cancellation signal at the input of the respective duplexer filter 48 and 52. The duplexer filters 48 and 52 and the CICS circuitry blocks 62 and 64 add undesired cost, group delay and complexity to the signal enhancement.

The conventional repeater 60 illustrated in Fig. 7 uses CICS circuitry blocks 62 and 64 to cancel all or a portion of unwanted feedback or coupled interference signals in the repeater 30. In contrast, exemplary embodiments of the present invention, as described herein, do not use CICS circuitry or similar circuitry to combat or cancel unwanted feedback or coupled interference signals in a signal enhancer unit.

One of ordinary skill in the art will recognize that a duplexer filter and a diplexer filter are fundamentally the same type of filter having three ports. A duplexer or diplexer filter is a specific case of the more general multiplexing filters having a common port and having an operational pass band that encompasses two or more ports having operational pass bands that are subsets of the operational pass band of the common port. The terminology duplexer filter is conventionally used when the two ports corresponding to subset operational bands are specifically used for transmitting and receiving RF signals, respectively. The diplexer filter terminology can be used more generally for two band separated RF signals where both band separated RF signals are for receive or transmit purposes. The terminology duplexer filter can be equivalently used to describe a diplexer filter.

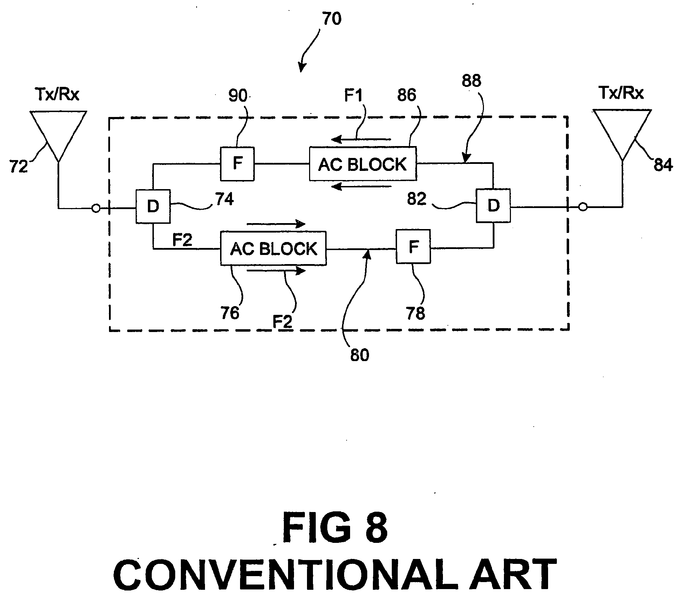

Referring to Fig. 8, a conventional adaptive cancellation repeater 70 is illustrated, such as described in PCT Publication No. WO 01/52447 A2. The repeater 70 includes a donor transmitting (Tx) and receiving (Rx) antenna 72, which feeds the received downlink signal F2 to a duplexer filter (D) 74, which in turn couples the downlink signal F2 to an adaptive cancellation circuit block (AC BLOCK) 76. The AC BLOCK 76 generates a negative signal, which is combined with the signal F2 to cancel the feedback signal or component from the signal F2. The signal F2 is also amplified in the AC BLOCK 76 and then coupled to a filter (F) 78, typically a band pass filter. The AC BLOCK 76 and the filter 78 form the active components in a downlink signal path 80. The filter 78 protects the amplifier in the AC BLOCK 76 from the signal power on the uplink path. The filter 78 couples the signal F2 to a duplexer filter (D) 82, which in turn couples the signal F2 to a second server transmitting (Tx) and receiving (Rx) antenna 84. The antenna 84 transmits the amplified downlink signal F2 to the user.

The user transmits a signal F1 for transmission to the base station, which is received by the antenna 84 and coupled to the duplexer filter 82, which in turn couples the signal F1 to an adaptive cancellation circuit block (AC BLOCK) 86 in an uplink path 88. The AC BLOCK 86 acts in the same manner as the AC BLOCK 76. The filter 90, typically a band pass filter, protects the amplifier in the AC BLOCK 86 from the signal power on the downlink path. The filter 90 couples the signal F1 to the duplexer filter 74, which in turn couples the signal F1 to the donor transmitting (Tx) and receiving (Rx) antenna 72. The antenna 72 transmits the amplified uplink signal F1 to the base station.

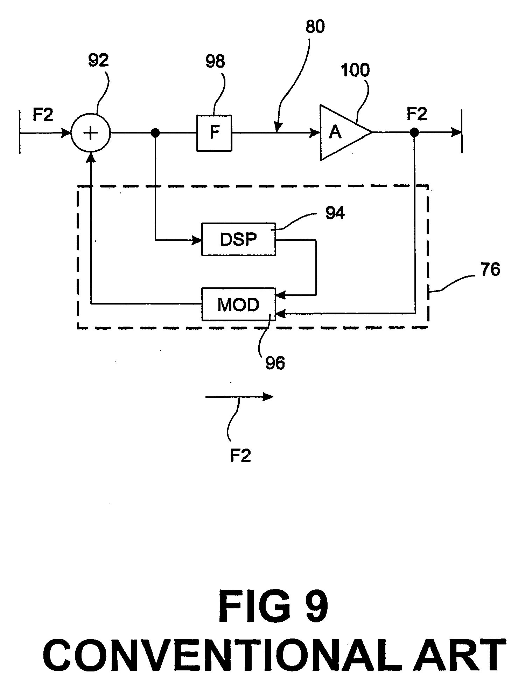

The operation of the AC BLOCK 76 is illustrated in Fig. 9. The downlink signal F2 is combined at a summing junction 92 with a modulated signal constructed in the AC BLOCK 76. The modulated signal is designed to destructively interfere with the feedback signal portion of the signal F2. The signal F2 is digitally sampled and further processed by a digital signal processor (DSP) 94. The DSP 94 computes an intermediate signal and couples it to a modulator (MOD) 96. The MOD 96 also is input a sample of the signal F2 after the signal has passed through a filter (F) 98 and has been amplified by an amplifier (A) 100. The MOD 96 creates the destructive modulated signal from the two inputs and couples it to the junction 92.

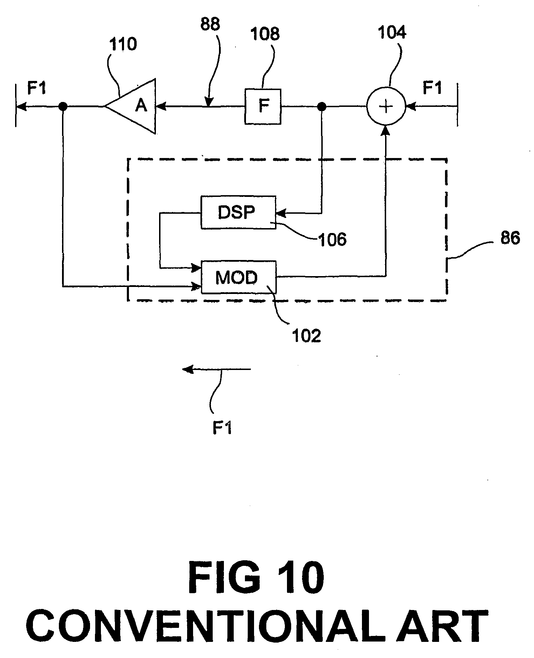

The operation of the AC BLOCK 86 is illustrated in Fig. 10. Like the AC BLOCK 76, the AC BLOCK 86 generates a modulated signal in a modulator (MOD) 102 designed to destructively interfere with the feedback signal portion of the signal F1. The modulated signal is combined in a summing junction 104 with the signal F1. The signal F1 is digitally sampled and further processed by a digital signal processor (DSP) 106. The DSP 106 computes an intermediate signal and couples it to the MOD 102. The MOD 102 also is input a sample of the signal F1 after the signal has passed through a filter (F) 108 and has been amplified by an amplifier (A) 110. The MOD 102 creates the destructive modulated signal from the two inputs and couples it to the junction 104.

The repeater 70 includes the AC BLOCKS 76 and 86 coupled between the output of the duplexer filters 74 and 82, respectively, and the output of the amplifiers 98 and 108. The repeater 60 injects the cancellation signal before the duplexer filters 48 and 52, whereas the repeater 70 injects the adaptive cancellation signal after the duplexer filters 74 and 82.

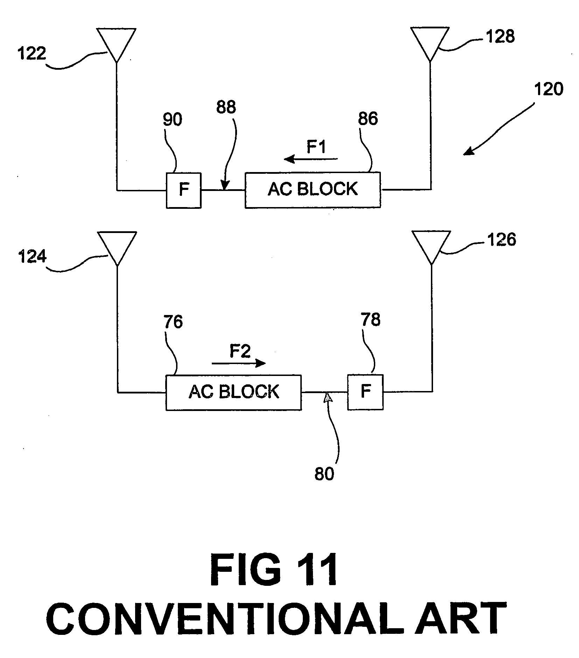

Referring now to Fig. 11, another conventional adaptive cancellation repeater 120, similar to the repeater 70, is illustrated. The repeater 120 includes a separate donor transmitting (Tx) antenna 122 for transmitting the uplink signal F1 to the base station and a separate donor receiving (Rx) antenna 124 for receiving the downlink signal F2 from the base station. The repeater 120 also includes a separate server transmitting (Tx) antenna 126 for transmitting the downlink signal F2 to the user and a separate server receiving (Rx) antenna 128 for receiving the uplink signal F1 from the user. With the exception of an absence of duplexer filters, the repeater 120 is in all other respects identical to the repeater 70.

The conventional repeater 120 illustrated in Fig. 11 comprises four (4) antennas and two (2) completely separate RF paths. The conventional repeater 120 uses separate antennas for transmitting and for receiving at the donor end of the system and separate antennas for transmitting and for receiving at the server end of the system. As described in more detail below, exemplary embodiments of the present invention typically comprise two (2) antennas. For example, an exemplary embodiment uses a single donor antenna and single server antenna and each antenna has two defined characteristic polarizations: one characteristic polarization for reception and one characteristic polarization for transmission of signals. Further, the characteristic polarization used for transmission of signals from the donor antenna is not the same as the characteristic polarization for reception of signals by the server antenna. Similarly, the characteristic polarization used for reception of signals by the donor antenna is not the same as the characteristic polarization for transmission of signals from the server antenna.

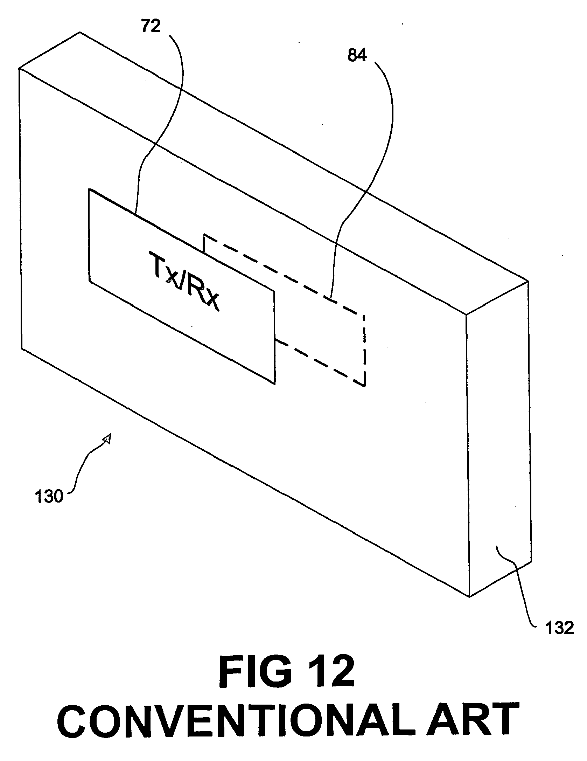

A flat panel module 130 of the repeater 70 is illustrated in Fig. 12. The module 130 includes a housing 132 into which the electronics of the repeater 70 are mounted. The antennas 72 and 84 are placed in a back-to-back orientation within the module 130, although the antenna 72 is shown on the outside of the housing 132 for illustration purposes. Like the repeater 60, the duplexer filters 74 and 82 (in the repeater 70) and the AC BLOCKS 76 and 86 add undesired cost, group delay and complexity to the signal enhancement of the repeater 70.

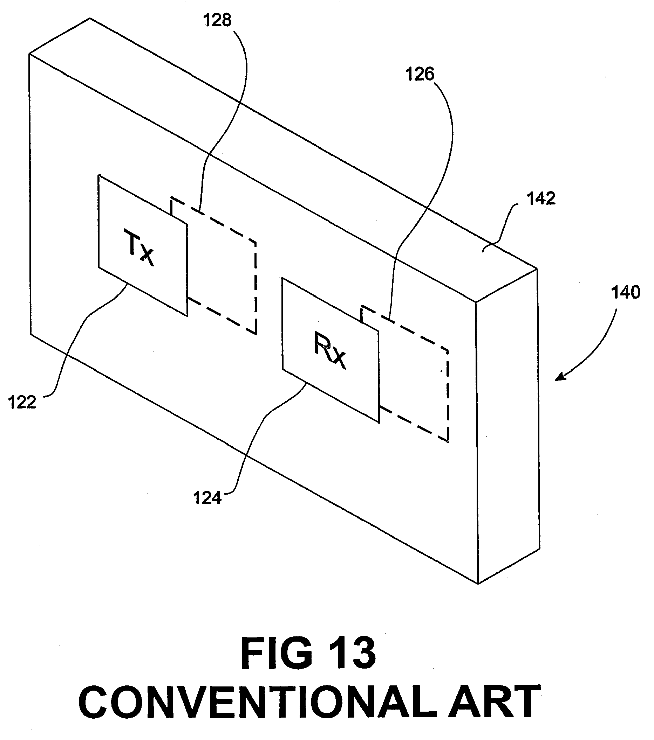

A similar flat panel module 140 of the repeater 120 is illustrated in Fig. 13. The module 140 includes a housing 142 into which the electronics of the repeater 120 are mounted. The pairs of antennas 122, 124 and 126, 128 are placed in a back to back orientation within the module 140, although the antennas 122 and 124 are shown on the outside of the housing 142 for illustration purposes. The antennas 122 and 124 are the donor antenna pair and antennas 126 and 128 are the server antenna pair. The donor transmit (Tx) antenna 122 and the donor receive (Rx) antenna 124 are arranged in a side by side configuration. Likewise the server transmit antenna 126 and server receive antenna 128 are arranged in a side by side configuration.

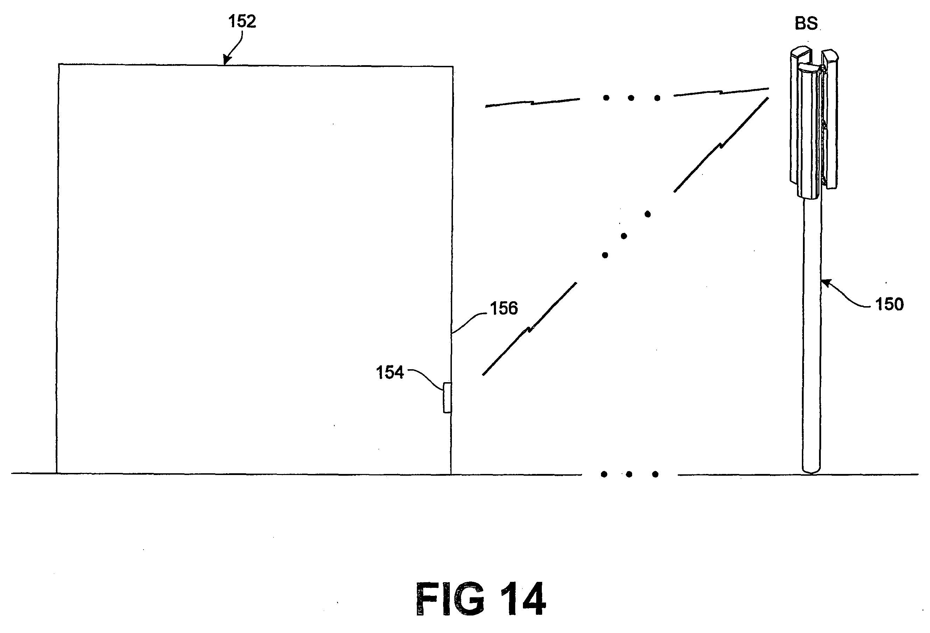

An illustration of the coverage area improved by signal enhancement supported by an exemplary embodiment of the present invention is illustrated in Fig. 14. A base station tower 150 transmits a signal that a user would like to receive by using a subscriber unit inside of a building or structure 152. The base station signal is too weak, for any one or more of the reasons previously enumerated, when received at the building 152 for the user to receive and use inside the building 152 with the desired quality of service. The signal is, however, still strong enough, at least on the order of about minus ninety (-90) to minus ninety-five (-95) dBm, to be received and enhanced by a signal enhancement unit 154 constructed in accordance with an exemplary embodiment of the present invention. The user can place the signal enhancement unit 154, also described as a signal enhancer, on or adjacent a wall or window 156 of the building 152. The user (not illustrated) can place the unit 154 adjacent an area of high RF transmission, such as a window (not illustrated), and then apply electric power to the unit 154 and observe if the signal can be received and amplified by the unit 154 for use inside the building 152.

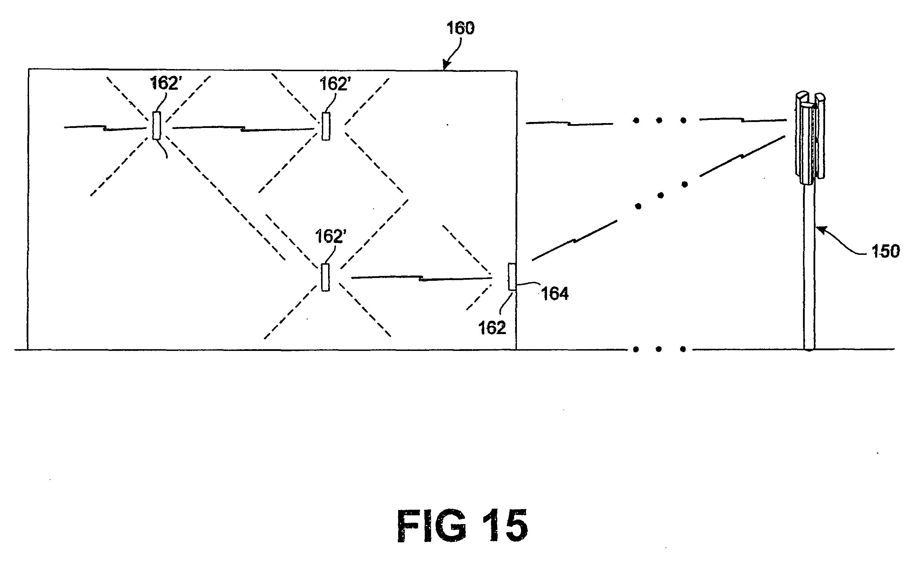

The same or another user also may desire coverage or improve the quality of service resulting from marginal coverage in a larger building 160 illustrated in Fig. 15. The user in the building 160 also receives a signal from the tower 150, which is initially too weak to be used or becomes too weak to be used in interior locations of the building 160 for the desired quality of service. In this situation, the user can again place an exemplary signal enhancer unit 162 adjacent a wall or window 164 to receive and enhance the signal from the base station tower 150. The user can use the enhanced signal inside the building 160 for a distance that is typically dependent upon many factors about the signal and the environment. For example, the enhanced signal coverage area can cover an area on the order of two thousand (2,000) square feet up to about five thousand (5,000) square feet. After that distance is exceeded or the user proceeds into another room or area, however, the signal may need to be enhanced again. The user can place one or more other enhancer units 162' throughout the building to obtain reliable signal coverage where desired. The units 162' are typically the same as the unit 162 and are placed within range of the first or primary unit 162 or another one of the units 162'. The units 162 and 162' can be considered cascaded or sequentially linked in operation. The units 162 and 162' are illustrated as being parallel in orientation to one another; however, the units 162 and 162' also can be placed at an angle to one another to widen or redirect the enhanced signal coverage obtained.

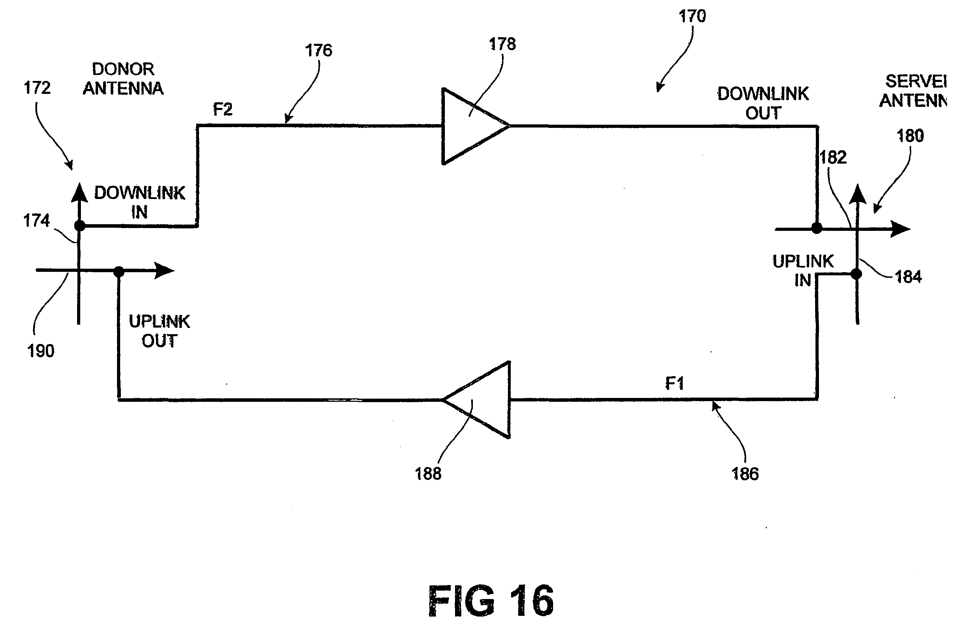

Referring to Fig. 16, a simplified block diagram of a signal enhancer 170 constructed in accordance with an exemplary embodiment of the present invention is illustrated. The exemplary signal enhancer 170 includes a first donor dual polarized antenna 172 having a first antenna characteristic polarization portion 174, which can be implemented by a vertically polarized characteristic. The antenna portion 174 receives the downlink signal F2 and couples it to a downlink signal path 176. The signal F2 is coupled to an amplifier 178, which forms a first part of a bi-directional amplifier (BDA) and which amplifies the signal F2 and couples the signal F2 to a second server dual polarized antenna 180. A first server antenna 180 having a characteristic polarization portion 182 is cross-polarized relative to the donor antenna characteristic polarization 174 and is horizontally polarized in this example. The antenna portion 180 can transmit the amplified downlink signal F2 to the user. A person of ordinary skill in the art will know that a second polarization that is cross-polarized relative to a first characteristic polarization has an orthogonal polarization characteristic relative to the first characteristic polarization.

A second antenna characteristic polarization portion 184 of the server antenna 180 is cross-polarized relative to the first characteristic polarization portion 182 and is vertically polarized. The antenna portion 184 receives the uplink signal F1 from the user and couples it to an uplink signal path 186. The signal F1 is coupled to an amplifier 188, which forms the second part of the bi-directional amplifier (BDA), amplifies the signal F1 and couples the amplified signal F1 to a second antenna characteristic polarization portion 190 of the donor antenna 172. The antenna portion 190 is cross-polarized to the first portion 174 and is horizontally polarized in this example. The antenna portion 190 transmits the amplified uplink signal F1 to the base station.

The downlink receiving polarization 174 is vertically polarized, which is orthogonal to the horizontal polarization 182 for the downlink transmitting portion for the signal F2. In a like manner, the uplink path has a receiving vertically polarized antenna portion 184, which is orthogonal to the horizontally polarized transmitting antenna portion 190 for the signal F1. The downlink receiving polarization 174 could be horizontally polarized, but preferably is vertically polarized, since a majority of base stations transmit with a vertical polarization. Consequently, a vertical polarized portion 174 will receive more power for a base station than if it was horizontally polarized. The orthogonal polarization between the downlink receiving antenna 174 and uplink transmitting antenna 190 can provide sufficient isolation such that the enhancer 170 does not require the duplexer filters required by the conventional art. Further, the isolation is sufficient to provide amplification without any type of signal transformation or feedback cancellation circuitry. The enhancer 170 thus provides a cost savings, a reduction in the noise figure and a reduction in the group delay of the enhancer 170 over conventional repeaters. The signal enhancer 170 is designed, as will be further described, such that a duplexer filter is not required by the antenna 172, even though only one first donor antenna 172 is used for both receiving from and transmitting to the base station and only one second server antenna 180 is used for both receiving from and transmitting to the user. The exemplary enhancer 170 is designed without conventional duplexer filters and can have lower signal losses or attenuation prior to the low noise receive amplifiers 240 and 276 as compared to the conventional art. The noise figure of the exemplary enhancer 170 is typically less than 6 dB.

Mobile positioning is an important emerging requirement for mobile wireless phone systems. The Federal Communications Commission (FCC) of the USA adopted a ruling in June 1996 (Docket no. 94-102) that requires all mobile network operators to provide location information on all calls to "911", the emergency services or so called E911 capability. Group delay is the rate of change of the total phase shift with respect to angular frequency through the device or the transit time required for RF power, traveling at a given mode's group velocity, to travel a given distance. The exemplary enhancer 170 provides a typical group delay value of less than 50 nanoseconds (ns). Some location schemes such as Enhanced Observed Time Difference (E-OTD) rely on accurate time measurements and excessive group delay can cause the E-OTD system some difficulty in accurately determining the point in the signal to be measured by all receivers.

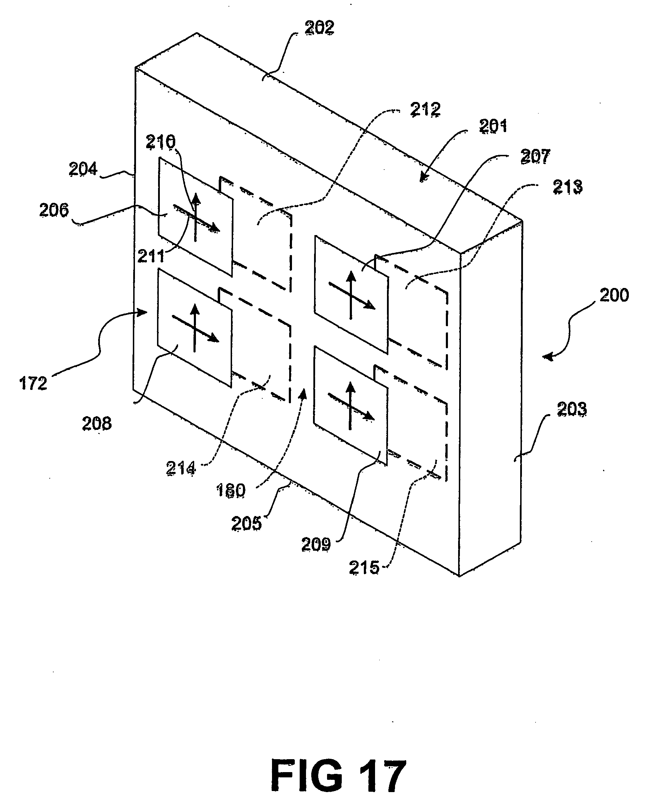

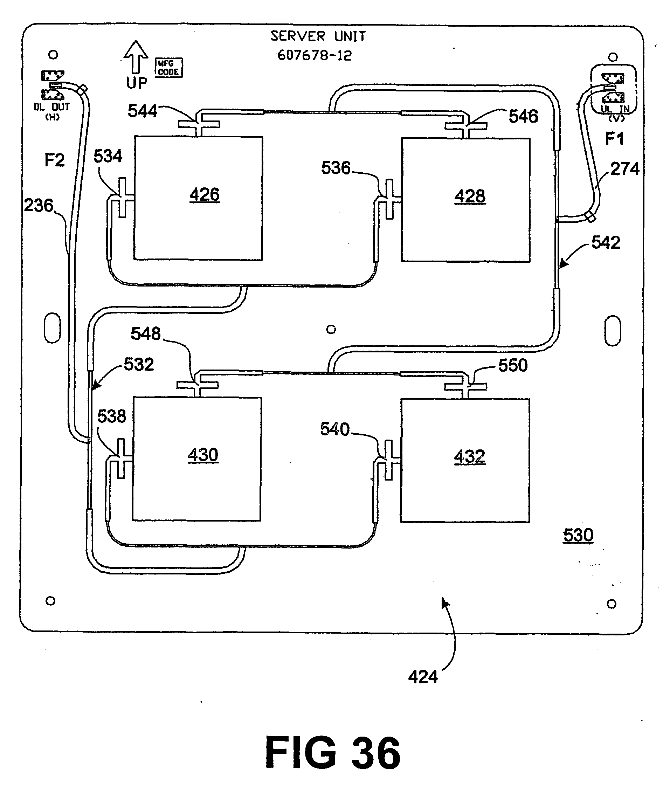

Fig. 17 illustrates a flat panel enhancer unit 200 constructed in accordance with another exemplary embodiment of the present invention. The unit 200 includes a housing 201, which contains the circuitry (not illustrated) of the enhancer unit 200. The housing 201 has a top side or edge 202, a pair of sides or side edges 203 and 204 and a bottom side or side edge 205. The donor antenna 172 can include a symmetrical array of four (4) patches 206, 207, 208 and 209, with each patch dual polarized (see Fig. 36) to provide the receive portion 174 and the transmit portion 190 orthogonal to one another. For example, the patch 206 includes a vertical orientation portion 210 and a horizontal orientation portion 211. Each of the other patches 207, 208 and 209 also has the same orientation portions (not separately numbered), which operate in the same manner. In a like manner, the server antenna 180 on the reverse or back side of the housing 201 can include a similar array of four (4) patches 212, 213, 214 and 215, with each patch dual polarized to provide the receive portion 184 and the transmit portion 182 orthogonal to one another in the similar manner as the patch 206.

The exemplary enhancer unit 200 uses antenna polarization isolation to reduce feedback signals between the server antenna 180 and the donor antenna 172 and to reduce signals between the transmit and receive functions on the server antenna 180 and on the donor antenna 172. These feedback signals are coupled through radiation means between the server antenna 180 and the donor antenna 172. The use of linear polarization orientations 210 and 211 that are perpendicular to and parallel to the sides or edges 202, 203, 204, and 205 of the housing 201 can mitigate cross coupling between the opposite or orthogonal polarizations of the server antenna 180 and the donor antenna 172. Linear polarizations 210 and 211 are principally perpendicular to and parallel to the conducting and dielectric boundaries of the sides or edges 202, 203, 204, and 205 and can minimize the coupling between a first antenna characteristic polarization portion 174 antenna 172 and a first characteristic polarization portion 182 that is cross-polarized relative to the antenna portion 174. In a like manner, linear polarizations 210 and 211 are principally perpendicular to and parallel to the conducting and dielectric boundaries of the sides or edges 202, 203, 204, and 205 and can minimize the coupling between a second antenna characteristic polarization portion 190 and a second characteristic polarization portion 184 that is cross-polarized relative to the antenna portion 190.

Linear polarizations 210 and 211 are principally perpendicular to and parallel to the conducting and dielectric boundaries of the sides or edges 202, 203, 204, and 205 and can minimize the coupling between a first antenna characteristic polarization portion 174 and a second characteristic polarization portion 190 that is cross-polarized relative to the antenna portion 174. In a like manner, linear polarizations 210 and 211 are principally perpendicular to and parallel to the boundaries of the sides or edges 202, 203, 204, and 205 and can minimize the coupling between a first antenna characteristic polarization portion 182 and a second characteristic polarization portion 184 that is cross-polarized relative to the antenna portion 182.

The boundaries of the sides or edges 202, 203, 204, and 205 of the exemplary enhancer unit 200 comprise conducting and/or dielectric materials that are substantially the same length. The housing 201 of the enhancer unit 200 is substantially a square shape in the plan view of the donor antenna 172 or the server antenna 180. The antenna array radiators 206, 207, 208, and 209 can be arranged with equal spacing in the donor antenna 172. In like manner, the antenna array radiators 212, 213, 214, and 215 can be arranged with equal spacing in the server antenna 180. The antenna array radiators 206, 207, 208, and 209 in the donor antenna 172 can be arranged in a back-to-back configuration relative to the antenna array radiators 212, 213, 214, and 215 of the server antenna 180. For this configuration, the primary directions of radiation of the donor antenna 172 and the server antenna 180 are substantially in opposite directions.

The exemplary flat panel enhancer unit 200, in contrast to the conventional flat panel modules 130 and 140 illustrated in Fig. 12 and 13, respectively, uses an antenna array of radiators having dual simultaneous characteristic polarizations 210 and 211 for the purpose of separating and isolating the uplink and downlink signals into two (2) paths. Exemplary embodiments of the present invention can use a single donor antenna array and single server antenna array, where each antenna array has two defined characteristic polarizations: one characteristic polarization for reception and one characteristic polarization for transmission of signals. Further, the characteristic polarization used for transmission of signals from the donor antenna array is not the same as the characteristic polarization for reception of signals by the server antenna array. Similarly, the characteristic polarization used for reception of signals by the donor antenna array is not the same as the characteristic polarization for transmission of signals from the server antenna array. Each characteristic polarization in the donor or server antenna array is for the single purpose of receiving a signal or for the single purpose of transmitting a signal. In other words, a characteristic polarization of an exemplary embodiment does not have the dual purpose or function of transmitting and receiving a desired signal, as shown by the enhancer unit 200.

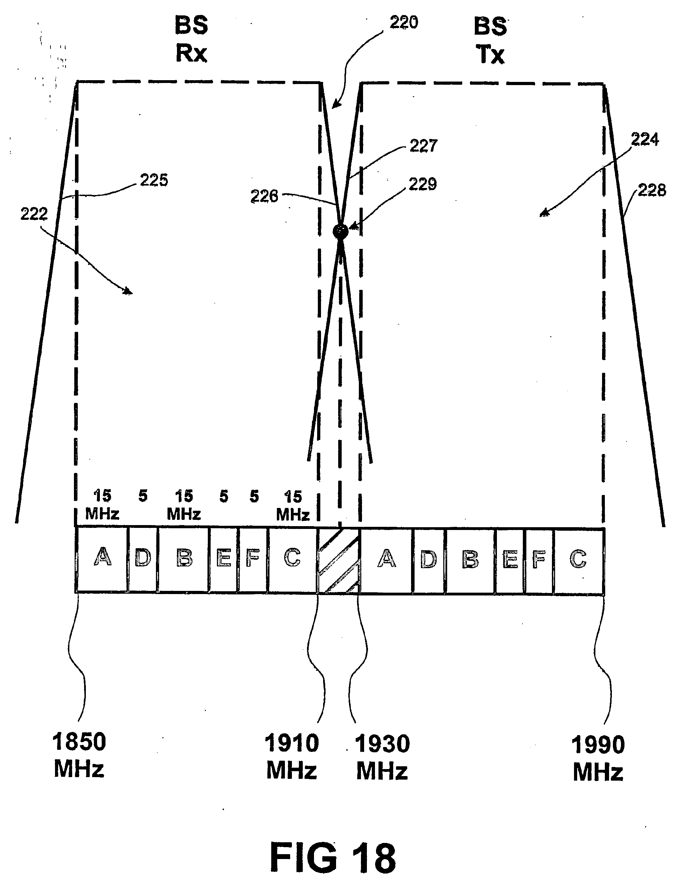

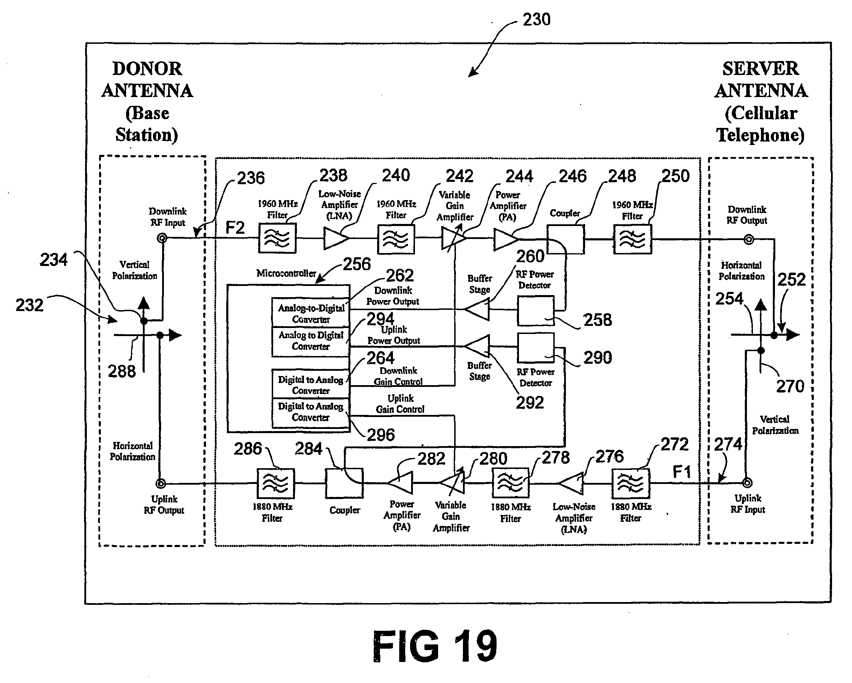

The frequency spectrum 220 for the PCS band, used by way of an example for the operation of exemplary embodiments, is illustrated in Fig. 18. The base station (BS) receives in a band 222 of 1850 to 1910 MHz and transmits in a band 224 of 1930 to 1990 MHz. Although a perfect transmit (Tx) band 224 and a perfect receive (Rx) band 222 would have a rectangular band shape (illustrated in dashed lines) existing only in the frequency band, there is some spread and overlap between the frequency response of signal enhancer filters defining the actual bands 222 and 224 performance characteristics. The actual frequency bands are illustrated by solid lines 225 and 226 for the band 222 and solid lines 227 and 228 for the band 224. The ideal bands have 20 MHz of separation, between 1910 and 1930 MHz. One critical point, however, is a crossover point 229 where the two bands actually overlap. The crossover point 229 will be discussed in further detail with respect to the filtering of the signals in Fig. 19. Each of the bands 222 and 224 is also subdivided into a plurality of sub-bands A, B, C, D, E and F that are individually licensed to service providers of a service area or zone within the US. An exemplary signal enhancer unit typically provides operational coverage across all of the sub-bands and can be viewed as a 'full-band' device.

A more detailed block diagram of an exemplary signal enhancer unit is illustrated in Fig. 19 and is designated generally by the reference numeral 230. The exemplary unit 230 includes a dual polarized donor antenna 232 with a downlink vertically polarized receiving portion 234, which couples the downlink signal F2 to a downlink signal path 236. The signal F2 is coupled to a first filter 238, which is designed to have a center pass frequency of 1960 MHz and to pass the receiving band F2 signal in the receiving band of 1930 to 1990 MHz (the transmitting band of the base station), while filtering out unwanted frequencies outside the band.

The preselector filter 238 and other filters of the unit 230 can be implemented by so-called "ceramic" band pass filters. For an exemplary embodiment, a conventional ceramic band pass filter can be used, where the filter has three (3) poles and is customized with a zero located at or near the adjacent band edge of the other operational transmit or receive band. The poles and zeros of the filter transfer function define locations of singularities within the s-plane conventionally used in filter analysis and design and are used as a measure of the complexity of the filter. Such filters are designed around the center frequency of 1960 MHz to pass the receiving frequency band of 1930 to 1990 MHz or around the center frequency of 1880 MHz to pass the transmitting frequency band of 1850 to 1910 MHz for uplink signals to the base station (BS), which leaves a separation of 20 MHz between the signals as illustrated in Fig. 18. However, as described, the bands 222 and 224 are not ideal, as shown with the dashed lines in Fig. 18, and there is an actual crossover point 229 between the responses of the bands 222 and 224.

The conventional three (3) pole ceramic preselector bandpass filters can be implemented by part number C031880E manufactured by Microwave Circuits, Inc. located in Washington DC for the transmitting frequency band of 1850 to 1910 MHz. The conventional three (3) pole ceramic bandpass filters can be implemented by part number C031960J manufactured by Microwave Circuits, Inc. for the receiving frequency band of 1930 to 1990 MHz.

The conventional three (3) pole ceramic bandpass filters have a performance characteristic near the crossover point 229 of approximately minus three (-3) dB relative to the peak signal level in the pass band regions 222 and 224. The slope and shaped of the conventional three (3) pole ceramic filter response outside the pass band regions 222 and 224 are primarily determined by the pass band width and the number of poles. The BS transmit (Tx) filter on the lower frequency side 227 has a measurable response within the pass band of the BS receive (Rx) filter pass band 222. This response represents the degree of isolation or rejection between the BS transmit (Tx) and BS receive (Rx) bands. Similarly, the upper frequency side 226 of the BS receive (Rx) filter has a measurable response within the pass band of the BS transmit (Tx) filter pass band 224. This response represents the degree of isolation or rejection between the BS receive (Rx) and BS transmit (Tx) bands.

By adding a zero in the filter transfer function at or near the adjacent band edge of the other operational transmit or receive band, the crossover value 229 can be reduced from approximately minus three (-3) dB of the conventional ceramic filter design to approximately minus ten (-10) dB and the degree of isolation or rejection between the BS transmit (Tx) and BS receive (Rx) bands can be increased. For example, a zero can be added at or near 1932 MHz of the BS receive (Rx) band pass filter having an operational band of 1850 to 1910 MHz and a zero can be added at or near 1908 MHz for a band pass filter having an operational band of 1930 to 1990 MHz. This filter design provides a crossover 229 rejection or isolation value that is minus ten (-10) dB relative to the operational pass band response. Locating the zero closer to the operational band can improve the rejection at the crossover 229 frequency of 1920 MHz but the pass band of the operational band can have greater attenuation and group delay.

The custom ceramic three (3) pole band pass filter with zero can be supplied by ComNav Engineering in Portland, Maine, which specializes in custom filters for wireless communication systems. A custom ceramic three (3) pole band pass filter with zero for the BS receive (Rx) band is part number 3BCR6C-1880/Z75-LX and for the BS transmit (Tx) band is part number 3BCR6C-1960/Z75-LX.

An additional advantage of the design and use of the three (3) pole ceramic bandpass filter with zero, is that the filters are relatively inexpensive and physically small in size. This design eliminates the need for additional filters or more complex filters with additional poles, which minimizes the size and cost of the filters as well as minimizes the group delay. By reducing group delay, as shown in the exemplary enhancer unit 230, the capability of finding a user in a timely fashion under Emergency 911 location requirements can be satisfied. A greater delay will result in a less accurate user location and hence can interfere with finding the user in an emergency. Exemplary embodiments of the enhancer unit 230 offer the attractive features of low-cost, the capability of portable use, and reduced group delay.

After filtering, the signal F2 is coupled to a low-noise amplifier (LNA) 240 for a first amplification stage for the signal F2, without significantly increasing the signal to noise ratio of the signal. The amplified signal F2 then is coupled to a second filter 242, which can be identical to the filter 238, for filtering the frequencies outside of the receiving band to more closely match the ideal receiving band. The filtered signal F2 is coupled to a variable gain amplifier 244, which controls the output power of the downlink signal F2. The variable gain amplifier 244 acts as a preamplifier if the gain is greater than or equal to unity, which is 0 dB or greater. The variable gain amplifier 244 can also act as an attenuator when the gain is less than unity or less than 0 dB.. The use of a variable gain amplifier 244 as a control device for the signal amplitude control can provide a resolution control of the signal amplitude in one-half (0.5) and one (1.0) dB step sizes and provides uniform control of the signal amplitude that can be achieved without calibration of each signal enhancer 230. The exemplary variable gain amplifier 244 has a dynamic range of approximately 50 dB covering the range of output signal values having a gain of approximately minus twenty-five (-25) dB to plus twenty-three (+23) dB.

The output signal of the variable gain amplifier 244 is further amplified by a power amplifier (PA) 246. The output of the PA 246 is coupled through a conventional directional coupler 248, which samples a small but amplitude proportional portion of the signal F2 as a measure of the output power of the PA. The directional coupler 248 can be a DC17-73 manufactured by Skyworks Solutions, Inc. in Woburn Massachusetts and can have an insertion loss of less than one (1) dB with a coupled port at a value of approximately minus eleven (-11) dB. Following the coupler 248, the output signal is coupled through a third and final filter 250, which can be identical to the filter 238.

The signal F2, after the final filtering, is coupled to a dual polarized server antenna 252 for transmission to a user from a horizontally polarized portion 254 of the antenna 252. The retransmission to the user from the antenna portion 254 provides the maximum isolation from the receiving portion 234 of the antenna 232, which is vertically polarized or orthogonal to the portion 254.

The variable gain amplifier 244 is controlled by a microcontroller 256, which samples the output power of the signal F2 from the directional coupler 248 at predetermined periodic intervals. The microcontroller can be a PIC16F873 device made by Microchip Technology, Inc. of Chandler, Arizona. The functions of the microcontroller 256 also could be performed by a custom application specific integrated circuit (ASIC), a complex programmable logic device (CPLD), a system-on-a-chip (SOC) integrated circuit, a field programmable gate array (FPGA), or a similar device.

The directional coupler 248 provides a sample portion of the signal F2 to a RF power detector 258. An exemplary embodiment uses a RF logarithmic detector and controller AD8313 manufactured by Analog Devices, Inc. in Norwood, Massachusetts. The use of a RF logarithmic detector provides a relatively wide dynamic range of signal amplitude detection and can provide accuracies of plus or minus three (±3) dB over a 70 dB dynamic range or plus or minus one (±1) dB over a 62 dB dynamic range. Lower cost devices, such as a diode detector, can be used but the accuracy and repeatability in the present application would require a calibration of each diode detector in an exemplary signal enhancer 230. Calibration of individual signal enhancers 230 would add significant cost to the unit in a high volume manufacturing operation. It is desirable to avoid the need for calibrating any aspect of the exemplary unit 230 after assembly.

The output signal from the RF power detector 258 is coupled to the microcontroller 256 through a buffer stage 260. The buffer stage provides a lower impedance output than the RF power detector output. The buffered output of the detected signal is coupled to an analog-to-digital converter (ADC) portion 262 in the microcontroller 256. The microcontroller 256 compares the RF detected power level of the signal F2 and compares it to a predetermined or initialization power level, as will be described hereinafter. During normal operation, the microcontroller 256 will compare the output power to a predetermined operating output level or a range thereof. The microcontroller 256 will send a signal to a digital-to-analog converter (DAC) portion 264 to adjust the output of the variable amplifier 244 and hence control the output power level of the signal F2. The DAC portion 264 can be a LTC 1661 Micropower Dual ten- (10-) bit DAC from Linear Technology Corporation of Milpitas, California. The LTC 1661 DAC provides two accurate addressable ten- (10-) bit DACs in a small package that have a high degree of linearity and so one device can provide the DAC portions 264 and 262.

The use of a variable gain amplifier 244 having a sufficient linear dynamic range control, a digital-to-analog converter (DAC) portion 264 to adjust the output of the variable amplifier 244 with a sufficient number of bits and a desired resolution over the control range, and a RF logarithmic power detector 258 with commensurate accuracy enables the implementation of signal amplitude control that can function without an individual calibration for each exemplary unit 230. A signal enhancer 230 that does not require calibration is important to achieving a low manufacturing cost.

The user sends a signal to be received by the antenna 252, amplified and retransmitted to the base station by the antenna 232 in a manner similar to the downlink signal path 236. A vertically polarized portion 270 of the antenna 252 receives the signal from the user. The uplink signal F1 then is coupled to a first filter 272 on an uplink signal path 274. The first filter 272 also is substantially identical to the filter 238, except it is designed centered on 1880 MHz to filter the transmit band of 1850 to 1910 MHz. With the exception of the frequency band, each of the elements of the uplink F1 signal path 274 is functionally identical to the corresponding element previously described with respect to the downlink signal F2 path 236. The filtered signal F1 then is coupled to an LNA 276 and output to a second filter 278. From the filter 278, the signal F1 is coupled to a variable gain amplifier 280 and output to a PA 282. The signal F1 then is coupled through a directional coupler 284 and a final filter 286 to a horizontally polarized portion 288 of the antenna 232 for transmission to the base station. As with the downlink signal F1, the output power level of the signal F1 is sampled by the directional coupler 284 and fed to a RF power detector 290. The RF power detector signal is coupled through a buffer 292 to an ADC portion 294 of the microcontroller 256. The microcontroller 256 outputs an analog control signal through a DAC portion 296 to control the gain of the variable gain amplifier 280 and hence the output power level of the signal F1.

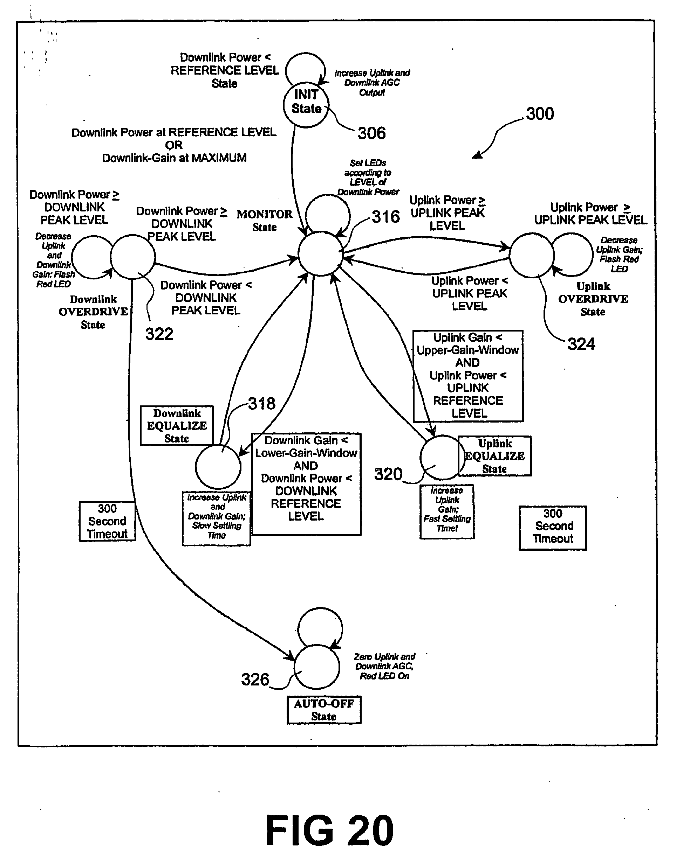

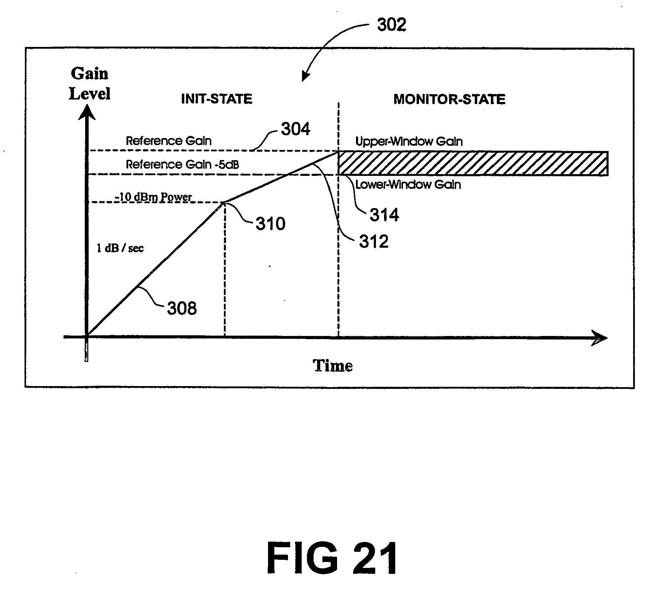

The desirable objectives of low-cost and portability for an exemplary signal enhancer support a need for an autonomous or automatic setup or initialization and monitoring routine. This automated setup routine is illustrated by a state diagram 300 in Fig. 20 and a timing and power diagram 302 illustrated in Fig 21. Upon the user applying power to a signal enhancer, such as the exemplary enhancer 230, the microcontroller 256 compares the downlink signal F2 power with a predetermined reference level or gain 304 (see Fig. 21) in an initial state (INIT State) 306. If the sensed downlink power level of the signal F2 is less (<) than the reference level 304, then the microcontroller 256 increases the output power of both the downlink signal F2 and the uplink signal F1. For example, the microcontroller 256 will increase the output power level at 1 dB per second, shown by a line 308, until a power level 310 of minus ten (-10) dBm is reached that is also below the level 304. The microcontroller 256 then will increase the output power level at 0.5 dB per second, shown by a line 312, until the reference power level 304 of zero (0) dBm is reached. Alternatively, a maximum variable gain amplifier setting of +23 dB may be reached and the reference level 304 will be adjusted accordingly. At that operating or initialization reference level 304, a lower level gain level 314 of five (5) dB less than the level 304 will be set. In other words, a lower level of a range of gain values to be set for maintaining the signal amplitude gain is minus five (-5) dB relative to the an upper level corresponding to the reference gain value.

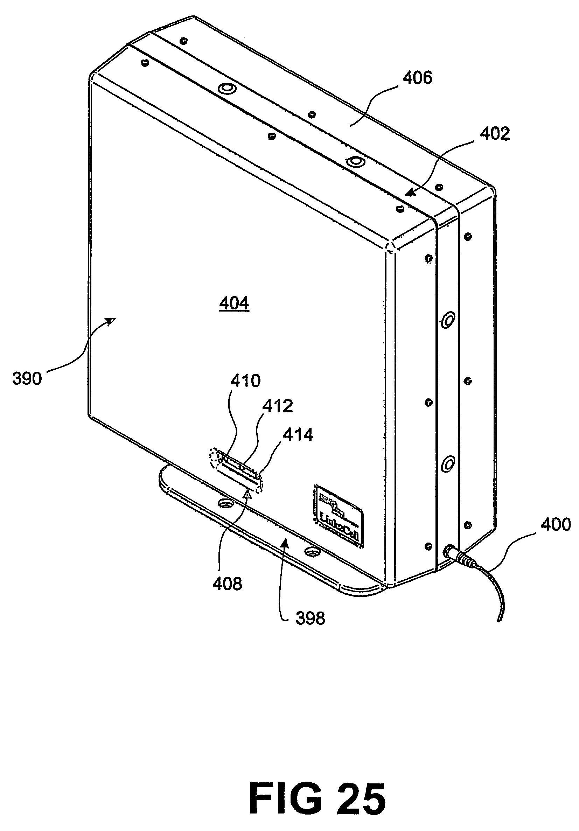

The microcontroller 256 then will enter a MONITOR State 316 and a set of LED's or other visual indicating devices (see Fig. 25) will be set to indicate the status of the operating downlink power level 304. In the monitor state 316, the microcontroller 256 monitors the operation of the enhancer unit 230 for several conditions.

In a downlink EQUALIZE State 318, the sampled downlink signal power F2 is less than the reference gain 304 value and the gain valve of the variable gain amplifier 244 is less than the lower-window gain 314 value. The microcontroller 256 can increase both the uplink and the downlink gain until the F2 signal power is within the window formed by the levels 304 and 314 or until the maximum allowable variable gain value or level is reached. The rate of signal gain increase is relatively slow, since the signal from the base station should be relatively consistent at a fixed distance.

In an uplink EQUALIZE State 320, the sampled uplink signal power F1 is less than the predetermined maximum uplink power level, for example plus twenty (+20) dBm, and less than the reference gain level 304. The microcontroller 256 can increase the uplink signal power F1 until either the predetermined maximum uplink gain level for the variable gain amplifier 244 or the reference gain level 304 is reached. In this case the rate of gain change is relatively fast since the user is free to move about in the building or other location, causing the uplink signal power level to fluctuate.

The use of downlink peak level and downlink overdrive level refer to a maximum signal amplitude value; both terms have the same meaning and the terms can be used interchangeably. Similarly, the use of uplink peak level and uplink overdrive level refer to a maximum signal amplitude value; both terms have the same meaning and the terms can be used interchangeably.

In a DOWNLINK OVERDRIVE State 322, the sampled downlink signal power F2 is greater than or equal to the predetermined monitoring level above the level 304. The microcontroller 256 can decrease both the uplink and the downlink gain until the F2 signal power is below the downlink overdrive reference monitoring level set at plus two (+2) dBm. In the State 322, a visual indicator, such as a red LED, is flashed to indicate that the maximum downlink signal power 304 is exceeded. The enhancer unit 230 will return to the MONITOR State 316 when the F2 signal power is again below the downlink overdrive reference monitoring power level of plus two (+2) dBm.

In an UPLINK OVERDRIVE State 324, the sampled uplink signal power F1 is greater than the uplink overdrive reference monitoring power level of plus twenty-one (+21) dBm. The microcontroller 256 can decrease the uplink gain only until the F1 signal power is below the uplink overdrive reference monitoring power level. In the State 324, a visual indicator, such as a red LED, is flashed to indicate that the maximum uplink signal power is exceeded. The enhancer unit 230 will return to the MONITOR State 316 when the F1 signal power is again below the uplink overdrive reference monitoring power level.

An AUTO-OFF State 326 is reached when a predetermined timeout period expires with either or both of the downlink signal F2 or the uplink signal F1 being greater than the respective peak levels during the timeout period. Upon the expiration of a predetermined timeout period, for example, a time period of three hundred (300) seconds in duration, the microcontroller 256 can decrease both of the downlink and the uplink paths 236 and 274 to a minimum gain setting. This is essentially a shutdown condition, which dramatically attenuates both of the RF signals F1 and F2.

This shutdown condition prevents the exemplary enhancer unit 230 from sustained overdrive conditions, such as might be caused by oscillations or instability. The exemplary unit 230 can provide, at the normal operation levels listed, a system gain on the order of about eighty (80) to eighty-five (85) dB. The exemplary enhancer unit 230 system gain typically includes the antenna gain values for the donor and server antennas that have peak gain values of approximately 13 dBi, respectively.

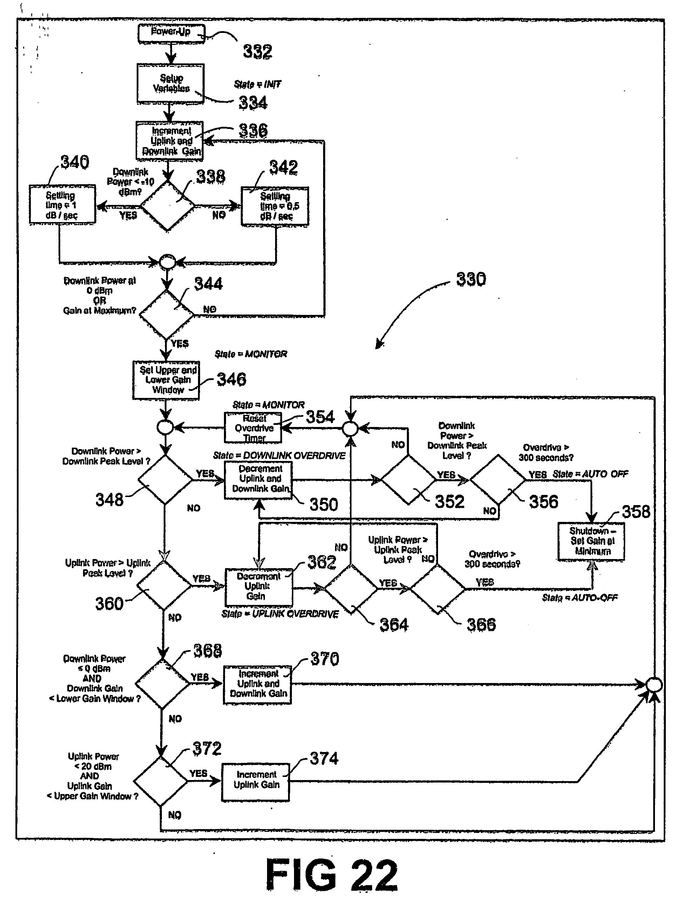

Fig. 22 provides a flow chart 330 illustrating the operations depicted in state diagram 300 to achieve variable gain control for an exemplary signal enhancer 230. In an initial step 332, the exemplary unit 230 has power applied and proceeds to automatically power-up. In a step 334 the variables are set in the microcontroller 256 and then the microcontroller 256 starts incrementing the gain in the uplink and downlink paths 274 and 236 in a step 336. As illustrated by the timing diagram 302 in Fig. 21, a step 338 (Fig. 22) determines if the downlink signal F2 power is more than minus ten (-10) dBm. If the downlink signal F2 power is less than minus ten (-10) dBm then the microcontroller 256 sets the increase to one (1) dB per second in a step 340. If the downlink signal F2 power is more than minus ten (-10) dBm then the microcontroller 256 sets the increase to one-half (0.5) dB per second in a step 342.

If the downlink signal F2 power is not yet at zero (0) dBm or the gain is not yet at the maximum variable setting, then a decision is made in a step 344 to return or loop back to the step 336 to continue incrementing the gains in the uplink and the downlink paths. If the downlink signal F2 power is at zero (0) dBm or the gain is at the maximum variable setting, then a decision is made in the step 344 to proceed with setting the upper gain level 304 and the lower gain level 314 (Fig. 21) in a step 346. The gain levels 304 and 314 in effect set an initialization window of operation and at this step the unit 230 also begins the monitoring state or operation.

A decision is first made in a step 348, whether the downlink signal F2 power is greater than the peak allowable output power or overdrive power level. If the downlink signal F2 power is greater than downlink overdrive power level then the DOWNLINK OVERDRIVE State 322 is reached and the uplink and the downlink path gains are both decremented in a step 350. If the downlink signal F2 power is then less than the downlink overdrive power level in a decision step 352, then the timeout period or overdrive timer will be reset in a step 354 and the unit 230 will return to the monitor state and the step 348. If the downlink signal F2 power remains greater than the downlink overdrive power level in the decision step 352, then the timeout or overdrive timer or time period will be checked in a decision step 356. If the preset time period has not yet expired, then the unit 230 will return or loop to the step 350 to continue decrementing the gain. If the preset time period has expired, then the unit 230 will shutdown in a step 358 by setting the gain in both the downlink and the uplink paths to the minimum value in the AUTO-OFF State 326.

If the decision in the step 348 is that the downlink signal F2 power is not greater than the downlink overdrive power level, then the uplink signal F1 power is checked against its preset peak limit in a step 360. If the uplink signal F1 power is greater than the preset peak limit, then the UPLINK OVERDRIVE State 324 is reached and only the uplink variable gain is decreased in a step 362. If the uplink signal F1. power is then less than the uplink overdrive power level in a decision step 364, then the timeout period or overdrive timer again will be reset in the step 354 and the unit 230 will return to the monitor state and the step 348. If the uplink signal F1 power remains greater than the uplink overdrive power level in the decision step 364, then the timeout or overdrive timer or time period will be checked in a decision step 366. If the preset time period has not yet expired, then the unit 230 will return or loop to the step 362 to continue decrementing the gain. If the preset time period has expired, then the unit 230 again will shutdown in the step 358 by setting the gain in both the downlink and the uplink paths to the minimum value, which forces the variable amplifiers to act as attenuators in the AUTO-OFF State 326.

If the uplink signal F1 power is not greater than the preset peak limit in the step 360, then a determination on whether the downlink signal F2 power is less than the initialization reference level of zero (0) dBm and the downlink gain setting is less than the lower window level 314 is made in a decision step 368. If the downlink signal F2 power is less than the downlink reference level of zero (0) dBm and the downlink variable amplifier gain is less than the lower window level 314, then both the uplink and the downlink path gain is increased or incremented in a step 370. The unit 230 then returns to the timer reset step 354 and then again to the monitor state 348. If the downlink signal F2 power is greater than or equal to the downlink reference power level of zero (0) dBm or the downlink variable gain setting is greater than the lower window level 314, then a decision is made whether the uplink signal F1 power is less than the uplink reference level of plus twenty (+20) dBm and less than the upper window level 314 in a step 372. If the uplink signal F1 power is less than the uplink reference power level of plus twenty (+20) dBm and the uplink variable amplifier gain value is less than the lower window level 314, then only the uplink signal F1 power is increased or incremented in a step 374. The unit 230 then returns to the timer reset step 354 and then to the monitor state 348. If the uplink signal F1 power is greater than or equal to the uplink reference power of plus twenty (+20) dBm or the uplink variable amplifier gain value is greater than or equal to the upper window level 314 in the step 372, then the unit 230 returns as before to the timer reset step 354 and then to the monitor state 348.

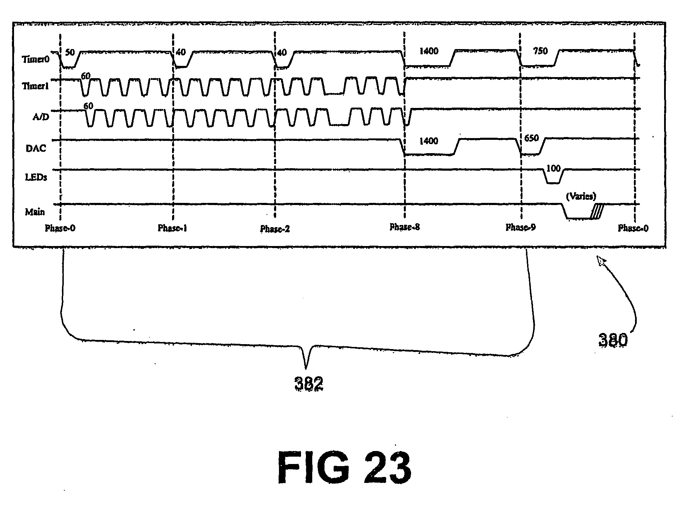

In the described operation of the exemplary unit 230, the uplink signal power F1 and the downlink signal power F2 are sampled periodically in accordance with a timer interrupt timing interval as illustrated, for example, by a timing diagram 380 in Fig. 23. If the downlink signal power F2 is above the peak limit or level 304, then both the uplink and the downlink paths are decremented at a predetermined rate, for example two (2) dBm per second until the overdrive condition is eliminated. If just the uplink signal power F1 is sensed to be in an overdrive condition, then just the uplink signal path is decremented at a predetermined rate, for example twenty (20) dBm per second until the overdrive condition is eliminated. As described, if either overdrive condition exists for a predetermine time period, for example three (300) hundred seconds [five (5) minutes] then both paths are set to a minimum gain to prevent any sustained overdrive condition in the unit 230.

The timer interrupt timing interval is set in the microcontroller 256 and provides the timing for all of the operations of the unit 230. As shown by the timing diagram 380, synchronous timed intervals of five (5) milliseconds (ms) are provided for periodic operations, such as the sampling of the power of the downlink signal F2 and the uplink signal F1, the DAC and ADC of the digital and analog signals and the visual indicator operation, among others. The five (5) ms intervals are formed by ten (10) phases; Phase-0, Phase-1, through Phase-9, which make up a synchronous block 382 and which continuously repeat. The synchronous block 382 operates every fifty (50) milliseconds (ms) by using a synchronous block counter (not illustrated) which is incremented every fifty (50) milliseconds (ms) at Phase-0. The synchronous block counter counts in a modulo two (2) manner to an overall timing frame of one hundred (100) milliseconds (ms) intervals for setting time delays in the unit 230. Another counter (not illustrated) is incremented every time frame [one hundred (100) milliseconds (ms)] for five (5) frames to provide a five hundred (500) milliseconds (ms) counter for use in providing the three hundred (300) second shut down timing period. The timing diagram 380 provides timing intervals of five (5), fifty (50), one hundred (100) milliseconds (ms) and one-half second for use by the unit 230.

The microcontroller 256 provides two timer interrupt periods at a fixed rate as shown in the timing diagram 380. A first timer interrupt, Timer0, provides the basic overall timing for the unit 230. There are ten (10) distinct Timer0 intervals, Phase-0 through Phase-9, with the first eight (8) intervals, Phase-0 through Phase-7 being used for the uplink signal F1 and the downlink signal F2 power level sampling. A second timer interrupt, Timer1, provides the ADC (Analog-to-Digital Converter) conversion rates. The ninth interval, Phase-8, is utilized for loading of the appropriate gain settings for the uplink signal F1 and the downlink signal F2 power levels into the DAC's 264 and 296. The tenth interval, Phase-9, is utilized for setting the gains of the uplink signal F1 and the downlink signal F2 variable gain amplifiers 244 and 280, updating the optical or visual indicators and providing counters for the fifty (50) and five hundred (500) milliseconds (ms) intervals. The fifty (50) milliseconds (ms) interval is utilized for updating the state of the microcontroller 256 and the five hundred (500) milliseconds (ms) interval is utilized both for flashing of the LED's or other visual indicators and for the three hundred (300) second time period utilized for timing out of the sustained overdrive condition.

There currently exist three (3) basic wireless protocols in use in the US PCS band for second generation (2G) wireless communications. The first protocol is the IS-95 standard, which is a Code Division Multiple Access (CDMA) protocol widely utilized in North America. CDMA is characterized as a spread-spectrum, meaning that CDMA spreads the information contained in a particular signal or interest over a much greater bandwidth than the bandwidth of the original signal. CDMA also uses unique digital codes, rather than separate frequency bands, to differentiate between channels. Since each user's channel is separated by a unique digital code, all users can share the same frequency band. The second protocol is the Global System for Mobile (GSM) telecommunications, which is a Time-Division Multiple Access (TDMA) protocol used predominately in Europe. In the TDMA protocol, the channels are spaced apart by time slots within an overall frame. The third protocol is the IS-136 standard, which is another TDMA protocol used in the North America.

As an example, the operation of an exemplary embodiment is referenced to use of the GSM protocol. The GSM protocol operates as a TDMA protocol having eight (8) time slots of five hundred and seventy-seven (577) microseconds duration per slot. The eight (8) time slots require a frame of four and six hundred and sixteen thousandths (4.616) milliseconds (ms). This sequence requires a frame interval of almost five (5) ms to encompass all eight :(8) time slots. The unit 230 can use a sampling interval for the ADC's (A/D) 262 and 294 of two hundred and fifty (250) microseconds, which provides at least two samples or more for every GSM time slot, according to the Nyquist sampling criteria or interval.

The Nyquist sampling interval is the maximum time interval between equally spaced samples of a signal that will enable the signal waveform to be completely determined. The Nyquist interval is equal to the reciprocal of twice the highest frequency component of the sampled signal. In practice, when analog signals are sampled for the purpose of digital transmission or other processing, the sampling rate must be more frequent than that defined by Nyquist's theorem, because of quantization error introduced by the digitizing process. The required sampling rate is determined by the accuracy of the digitizing process.

When the samples are taken of the downlink signal F2 and the uplink signal F1 power levels, the maximum or peak value sampled is preserved over the duration of the frame, here five (5) milliseconds (ms). This technique assures that the maximum power level in the GSM frame [over the eight (8) GSM time slots] is determined, especially over the uplink channel or path 274 where the available time slots may not be all in use in a cellular site during a time when the site is operating at less than the site communication capacity. In contrast the CDMA protocol is a spread spectrum technique. The CDMA power spectrum is evenly distributed over the frequency band and thus a more simple sampling technique can be utilized with the CDMA protocol. The exemplary signal enhancer unit 230 does not distinguish between the three protocols, so the peak sampling method described with the GSM protocol is utilized, since it will work well with which ever of the three protocols is being utilized for the wireless communications.

As a second example, the operation of an exemplary embodiment is referenced to use of the IS-136 protocol. The IS-136 protocol operates as a TDMA protocol with six (6) time slots at half-rate (4800 bits/second) and three (3) time slots at the full rate (9600 bits/second). In order to cover the IS-136 protocol, the GSM sample rate of two hundred and fifty (250) microseconds per channel is utilized, but sampled over the IS-136 protocol frame of forty (40) ms. This sample rate ensures that the six (6) time slots at half-rate or the three (3) time slots at the full rate are covered. In the GSM protocol, the sampling is over the eight (8) GSM frames or the sixty-four (64) time slots, but since the monitoring state control loop is invoked every fifty (50) milliseconds (ms), the sampling is sufficient for complete coverage. The monitoring state control loop executes every fifty (50) milliseconds (ms) at the ninth Timer0 interval. The main control loop changes the gain variables for the uplink and the downlink channels or paths 236 and 274 based upon the present sampled peak power levels as determined over the forty (40) milli-second (ms) sampling frame.

A person of ordinary skill in the art will recognize the need to sample the peak power level appropriately to derive a value that substantially represents the peak power for the communication system protocol of the signals being enhanced by the unit 390. A periodic sampling of a portion of the signals being amplified by the unit 390 can have a sampling interval defined by Nyquist's theorem and an acceptable error attributed to quantization of the analog signal into a digital format. The required sampling interval can be determined by the communication system protocol having the greatest frame rate. The required sampling period or duration for a sequence of consecutive samples can be determined by the communication system protocol having the greatest frame period. The update rate for peak power detection can be less than the inverse of the sampling period.

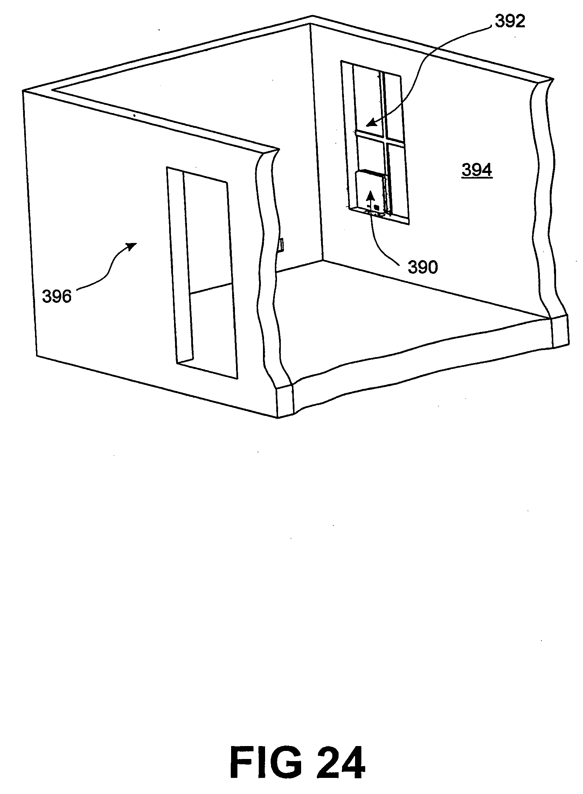

Referring now to Fig. 24, an exemplary enhancer unit embodiment 390 is mounted in a window 392 of a wall 394 of a partially illustrated building structure 396. The unit 390 generally will be placed adjacent to or mounted in a window, since the window 392 generally is the area of greatest RF frequency transmission into and out of a building structure.

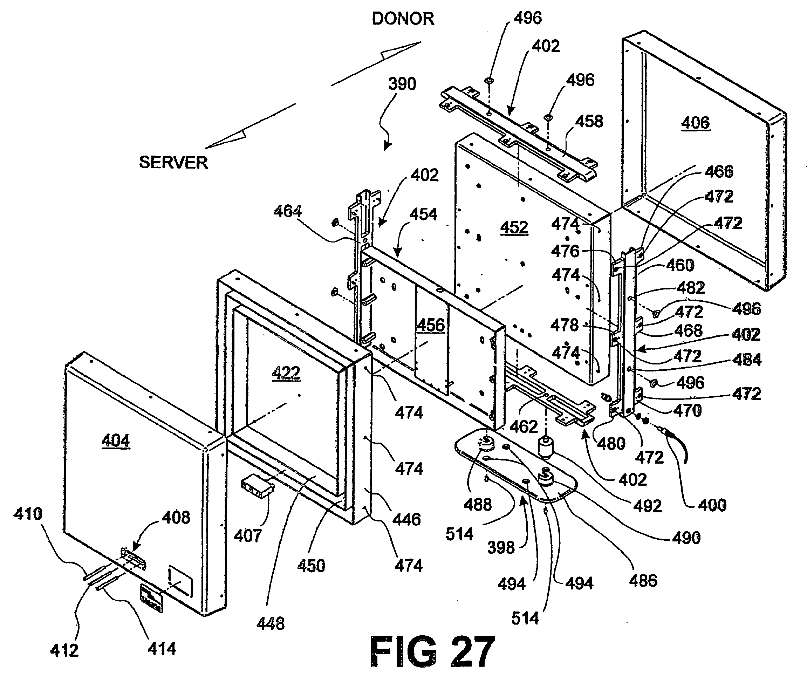

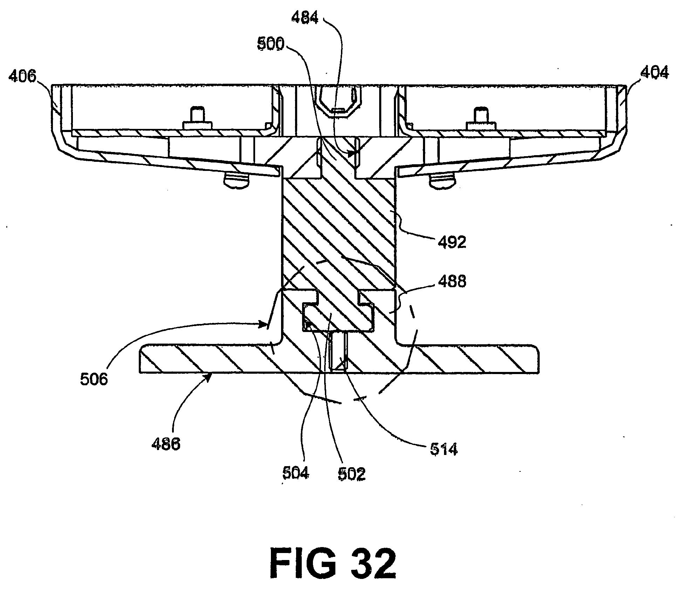

An enlarged view of the exemplary unit 390 is illustrated in Fig. 25. The unit 390 generally will be mounted in or to a structure utilizing a mounting stand 398, which will be described in further detail with respect to Figs. 27 and 32. The unit 390 can include a conventional power cable 400, which can be plugged into the conventional power outlet (not illustrated) by the user to power up and initialize the unit 390. Alternatively, the unit 390 can include a conventional power cable 400, which can be connected to a conventional direct current (DC) power source such as a battery. The automatic startup routine provides the unit 390 with a so-called "plug-and-play" user capability when applying electrical power to the signal enhancer unit from an un-powered state. The unit 390 has a support structure 402 (see Fig. 27), which supports an outer front server side radome 404 that is a dielectric material and a back donor side radome 406 that is a dielectric material and the other elements of the unit 390. The front radome 404 can include a visual indicating array 408 of LED's or other optical indicators, such as a liquid crystal display. The array 408 includes, for example, an amber LED 410, a red LED 412 and a green LED 414, in no particular sequence.

These three LEDs are used to indicate a relative level of downlink variable amplifier gain during the startup initialization. For example, startup initialization is indicated by flashing the green LED at one-half (0.5) second intervals and the relative power of the downlink amplifier is indicated by on, off or flashing of the amber LED 410 and the red LED 412. Once the initialization is finished, the firmware enters the monitor state. The monitor state indicates the downlink overdrive state by flashing the red LED 412. The uplink overdrive state is indicated by a flashing green LED 414. The shutdown or auto-off state is indicated by a solid red LED 412. If no overdrive or auto-off condition exists, then the downlink signal loss is indicated by flashing the amber LED 410. If a relatively low downlink signal power is detected, then the amber LED 410 is turned on solid. If the downlink signal is greater than the low-signal threshold, then the green LED 412 is turned on solid.

The array 408 can be utilized to visually indicate the operation status of the unit 390 to the user. For example, the amber LED 410 flashing indicates that there is not sufficient downlink signal F2 power available to the unit 390. The user can try another location, such as another window on another side of the structure 396 (not illustrated), since the user probably will not initially know where the strongest signal will be received. The amber LED 410 being continuously on indicates that there is a low level of downlink signal F2 power available to the unit 390. This prompts the user to again try another location.

The red LED 412 flashing indicates that there is too much downlink signal F2 power available at the unit 390, an overdrive condition. The red LED 412 continuously on indicates that there is an overdrive condition of the downlink signal F2 power to the unit 390, which has exceeded the timeout period and the unit 390 has been shutdown.

The green LED 414 flashing indicates that there is sufficient downlink signal F2 power available at the unit 390 and the unit 390 is initializing. The green LED 414 continuously on indicates that there is sufficient downlink signal F2 power available at the unit 390 and the unit 390 is in the normal operating and monitoring state.

A person of ordinary skill in the art will recognize that the use of LEDs 410, 412, and 414 with distinguishing colors or position on the unit 390 and providing an indication of the condition or status of electronic operation of the unit can be accomplished through alternate means and visual displays. The use of LEDs is a low cost means of providing indications of condition or status of operation to the user. Other types of displays, such as a liquid crystal display (LCD), can provide a similar function and can further provide additional information through the use of numerical values and offer more space to display information.

A person of ordinary skill in the art will recognize that other values for the reference powers and for the reference gains can be used in the initiation and monitor states of the signal enhancer 230 and be within the scope of the invention. As an example, the uplink overdrive power level or uplink peak power level can be approximately reduced from the plus twenty (+20) dBm value previously stated to approximately plus fifteen (+15) to plus seventeen (+17) dBm in order to satisfy Federal Communications Commission (FCC) limitations for RF emissions of effective radiated power (ERP). Further, parameters for update rates, amplitude signal step sizes, signal change rates, timeouts, settling times and the like can be different that the values stated and can remain with the scope of the invention. An exemplary signal enhancer 230 has been described with operational capabilities for GSM, CDMA, and IS-136 TDMA capabilities in the US PCS frequency band of operation. The device 230 can be modified for operation in a different frequency spectrum and/or can be modified to be used to support additional protocols including, but not limited to, WCDMA, IMT2000, 1xEV-DO, GPRS, EDGE, TETRA, and iDEN.

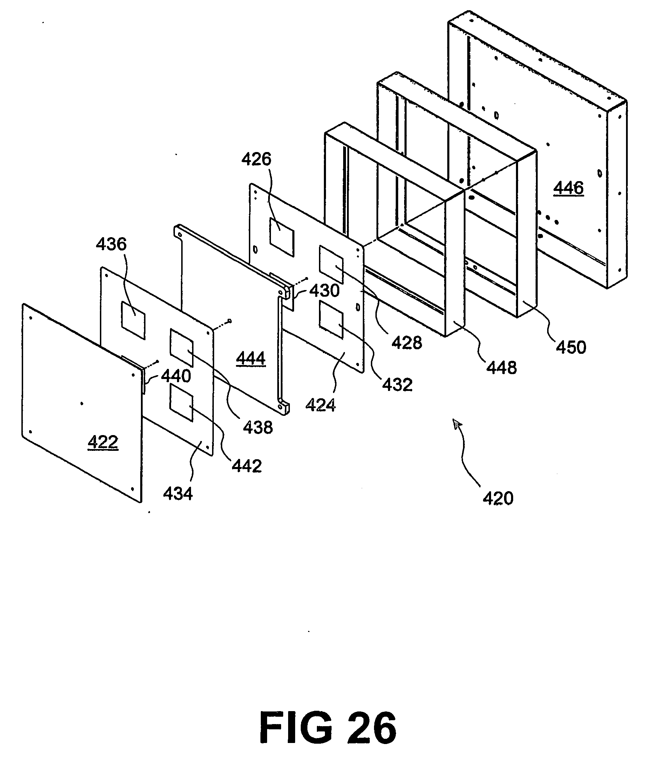

Referring now to Fig. 26, a partial or server subassembly 420 of the exemplary unit 390 is illustrated. The subassembly 420 can be the end product of one stage of the manufacture of the unit 390, which may then be sold to large distributors or other entities, which can add their own front dielectric radome 404 and rear dielectric radome 406. The subassembly 420 includes an inner or first dielectric radome layer or plate 422, which can be utilized to hold the subassembly 420 together and can be eliminated where the front dielectric radome 404 is added to the subassembly 420 before shipping to the user.

The subassembly 420 includes at least one server patch array driven antenna layer 424. Each of the array patches 426, 428, 430 and 432 correspond to the vertically and horizontally polarized portions 254 and 270 of the server antenna 252 (see Fig. 36). The antenna 252 typically includes a second parasitic patch array antenna layer 434 to add operational bandwidth to the unit 390. Each of the non-driven parasitic array patches 436, 438, 440 and 442 correspond to the respective driven array patches 426, 428, 430 and 432. The antenna 252 includes a foam core dielectric spacer layer between the two antenna array layers 424 and 434. The subassembly 420 further includes a metallic or metal conducting ground plane or tray 446 and a pair of choke frames 448 and 450, which form a RF choke assembly when assembled with the tray 446 to suppress and control the RF currents that can otherwise flow on or about the peripheral edges or sides 202, 203, 204, and 202 (Fig. 17). The exemplary RF choke assembly forms two (2) channels surrounding the radiating elements in layers 432 and 442; each channel is approximately one-quarter of a wavelength deep at the operational frequency which is approximately 1920 MHz.

Referring now to Fig. 27, an exploded view of the partially assembled exemplary unit 390 is illustrated. The ground plane or tray 446 is assembled with the choke frames 448 and 450, which are sized to fit within one another with a defined gap. This provides one or more channels having a width of less than one-half (1/2) wavelength and preferably less than one-third (1/3) wavelength at the operational frequency. The server antenna elements 424, 434 and 444 are mounted together with the radome 422 forming an outside cover over the elements. The donor antenna elements (not illustrated) also are mounted together in a tray or ground plane 452 with the rear radome 406 forming an outside cover over the elements, including an inner radome (not illustrated), like the radome 422. An electronics enclosure 454 is mounted between the trays 446 and 452. The server antenna elements 424, 434, and 444 can be mounted in a back-to-back relationship with the donor antenna elements. For example, the driven radiator elements 426, 428, 430, and 432 in layer 424 and the parasitic radiator elements 436, 438, 440, and 442 can be aligned over top the corresponding driven radiator elements and parasitic radiator elements of the donor antenna with a separation distance between a server antenna layer 424 and a similar donor antenna layer 424. In other words, the donor and server antenna arrays can face opposite directions, where the individual radiators are over top one another with one or more conducting ground plane between the antenna arrays.

One or more electronics boards 456 are mounted in the enclosure 454. The support structure 402 can be four substantially identical support plates 458, 460, 462 and 464, which are mounted to the sides of the trays 446 and 452. Only the support plate 460 will be described in detail, since each of the plates 458, 460, 462 and 464 are substantially identical. The plate 460 includes a first set of arms 466, 468 and 470, each having an aperture or opening 472, which align With openings 474 in the tray 452. The plate 460 is mounted to the tray 452 with fasteners (not illustrated) inserted through the each of the pairs of openings 472 and 474. The plate 460 also includes a second set of arms 476, 478 and 480, each also having the aperture or opening 472, which align with openings 474 also formed in the tray 446. The plate 460 also is mounted to the tray 446 with fasteners (not illustrated) inserted through the respective pairs of openings 472 and 474.

Each of the plates 458, 460, 462 and 464 also has a pair of threaded apertures 482 and 484. The mounting stand 398 includes a base plate 486 with a pair of U-shaped leg supports 488 and 490. A pair of legs 492 (only one of which is illustrated in Fig. 27) are threaded into the apertures 482 and 484 in the plate 462, for example, although any one of the plates 458, 460, 462 and 464 can be utilized depending on how the unit 390 is to be mounted. The mounting stand 398 base plate 486 also can include a plurality of apertures 494, which can be utilized to mount the plate 486 to any desired surface with appropriate fasteners (not illustrated) inserted through the apertures 494.

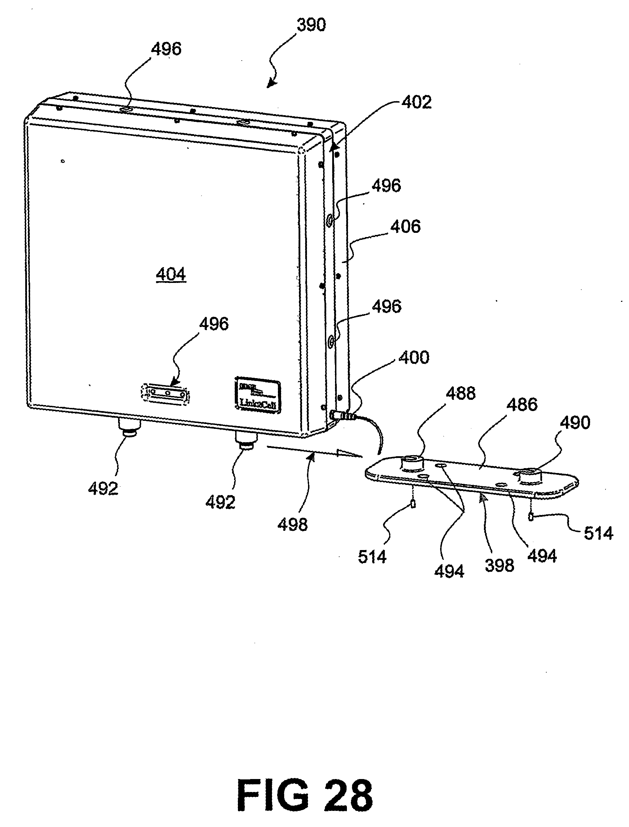

The legs 492 then are snap-fit into the U-shaped leg supports 488 and 490 to support the unit 390 in or on the mounting stand 398, as illustrated by an arrow 498 in Fig. 28. When not being utilized, the apertures 482 and 484 can be sealed or covered with inserts 496.

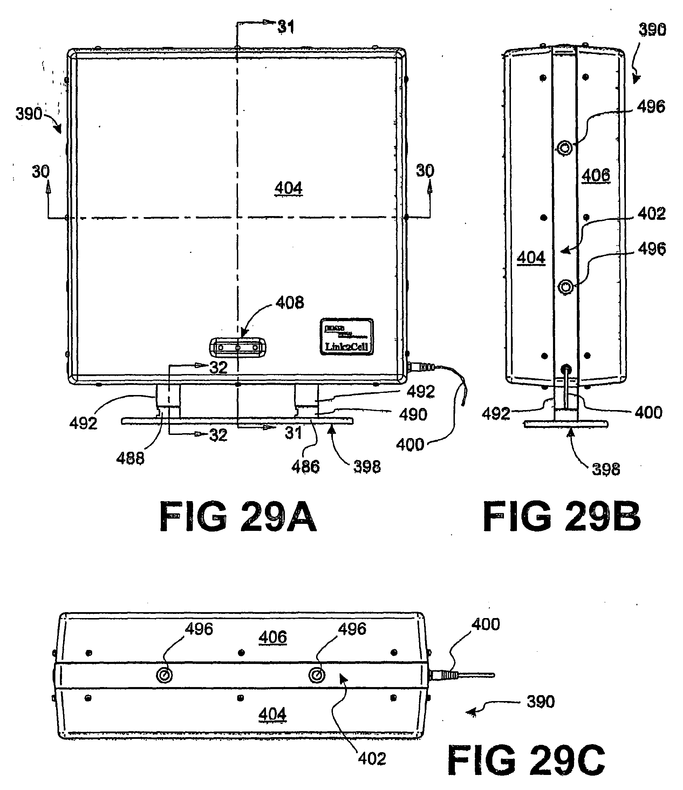

Figs. 29A, 29B and 29C illustrate front, side and top plan views of the unit 390.

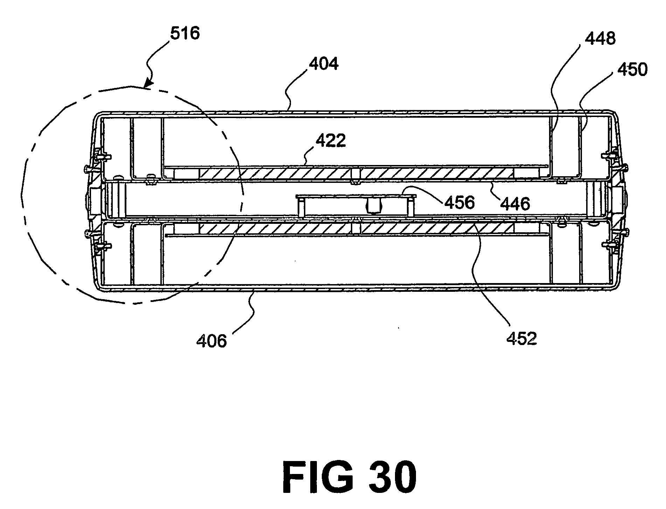

Fig. 30 is a cross-sectional view of the unit 390 taken along the line 30-30 in Fig. 29A.

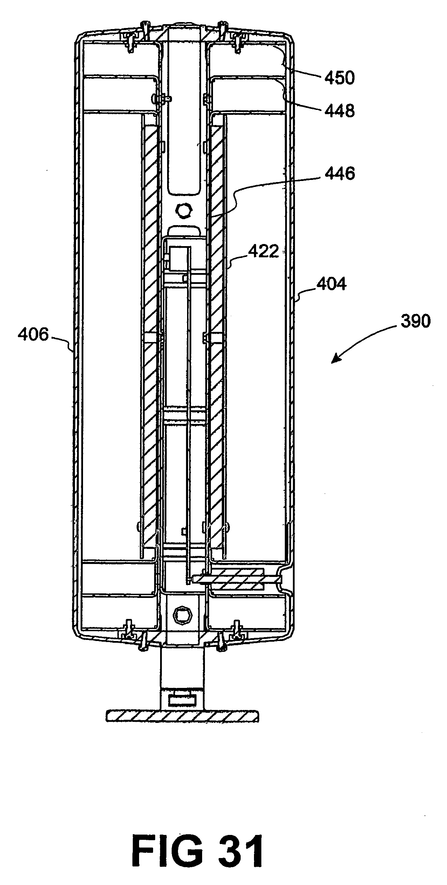

Fig. 31 is a cross-sectional view of the unit 390 taken along the line 31-31 in Fig. 29A.

Fig. 32 is a cross-sectional view of the unit 390, the base plate 486 and the leg 492 taken along the line 32-32 in Fig. 29A. The leg 492 includes a threaded post 500 at one end, which is threaded into the opening 484. The leg 492 includes a flanged head 502, which is shaped to mate with a mirror image flanged opening 504 formed in the leg support 488.

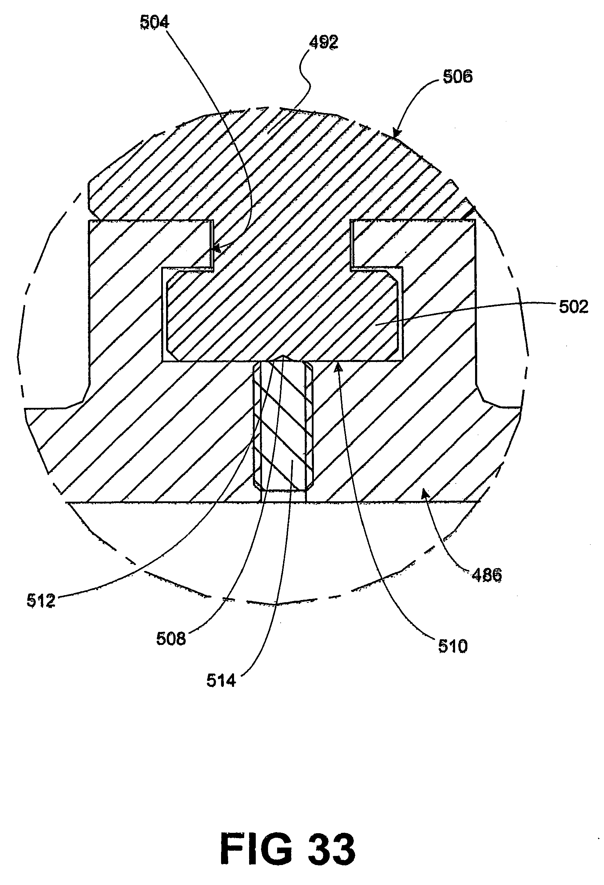

Fig. 33 is an enlarged cross-sectional view of the base plate 486 and the leg 492 in area 506 in Fig. 32. The leg 492 also can include a recess or detent 508 in a bottom face 510. The face 510 mates with the opening 504 while the detent 508 is biased against a mating small protrusion 512 formed on the top of a spring-loaded (not illustrated) pin 514. The pin 514 and the protrusion 512, which fits into the detent 508 helps retain the unit 390 in the mounting stand 398.

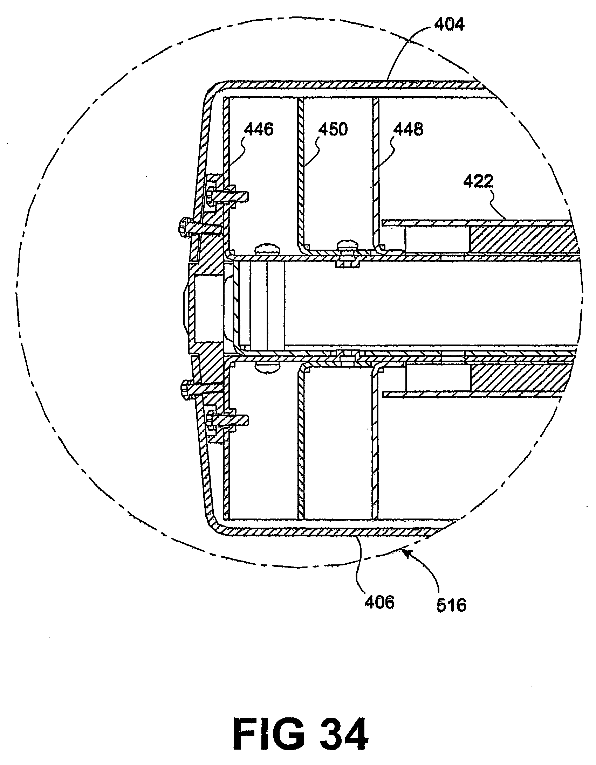

Fig. 34 is an enlarged cross-sectional view of the choke assembly area 514 in Fig. 30.

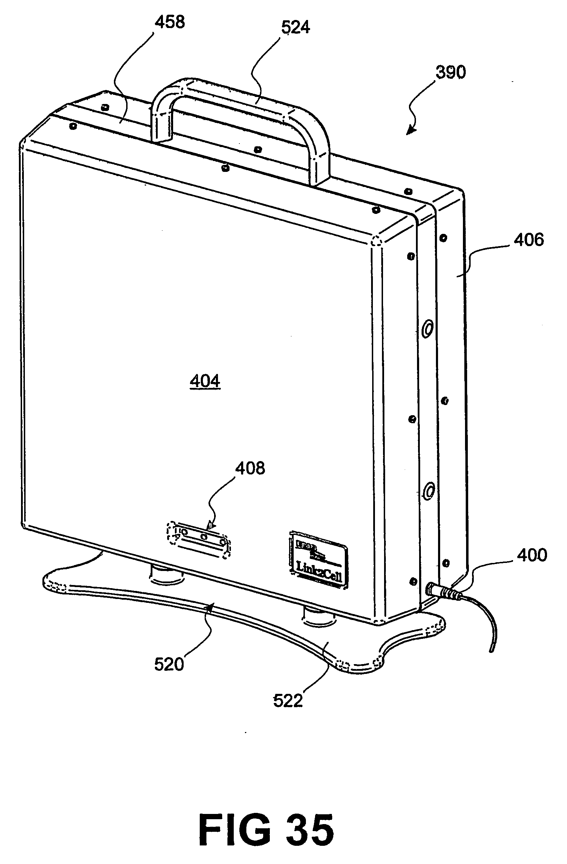

Fig. 35 is another perspective view of the exemplary enhancer unit 390 with a free standing mounting stand 520. The stand 520 is substantially identical to the stand 398, except for an enlarged base plate 522. The enlarged base plate 522 does not have a particular critical shape, but will be large enough to support the unit 390 as a free standing unit. The unit 390 is intended to be portable for the user to move to locations or buildings as desired. To facilitate the portability of the unit 390, a handle 524 can be mounted in the threaded openings 482 and 484 (not illustrated) in the top support plate 458.

Fig. 36 illustrates a server dual polarized antenna 424 for the exemplary enhancer unit 390. The exemplary antenna 424 typically includes a printed circuit board (PCB) 530 onto which are formed the metallic patches 426, 428, 430 and 432. The downlink signal F2 on the downlink path 236 is coupled by an RF distribution network 532 to the patches 426, 428, 430 and 432. The network 532 feeds the signal F2 to each of the patches 426, 428, 430 and 432 by a respective horizontal feed element 534, 536, 538 and 540, which forms the horizontal polarized downlink portion 252 of the server antenna 252 in Fig. 19.

In a like manner, the uplink signal F1 is received by the patches 426, 428, 430 and 432 and coupled to the uplink path 274 by an RF distribution network 542. The network 542 receives the signal F1 from each of the patches 426, 428, 430 and 432 by a respective vertical feed element 544, 546, 548 and 550, which forms the vertical polarized uplink portion 270 of the server antenna 252

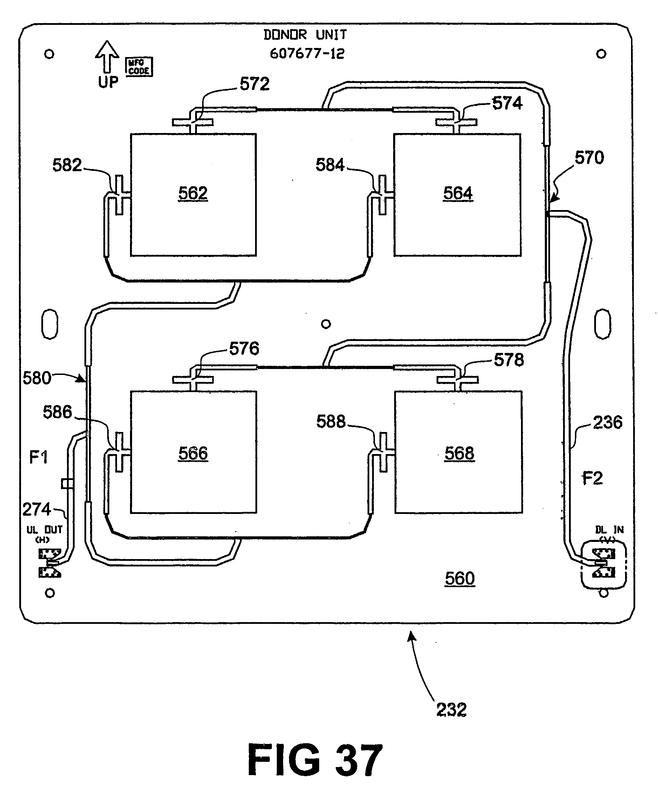

Fig. 37 illustrates a donor dual polarized antenna 232 of the exemplary enhancer unit 390. The exemplary antenna 232 can include a printed circuit board (PCB) 560 onto which are formed four metallic patches 562, 564, 566 and 568. The downlink (DL) signal F2 is received by the patches 562, 564, 566 and 568 and coupled to the downlink path 236 by a RF distribution network 570. The patches 562, 564, 566 and 568 receive the signal F2 and feed a respective vertical feed element 572, 574, 576 and 578, which forms the vertical polarized downlink portion 234 of the donor antenna 232 in Fig. 19.

In a like manner, the uplink signal F1 on the uplink (UL) path 274 is coupled to the patches 562, 564, 566 and 568 by a RF distribution network 542. The network 542 feeds the signal F1 to each of the patches 562, 564, 566 and 568 by a respective horizontal feed element 582, 584, 586 and 588, which forms the horizontally polarized uplink portion 288 of the donor antenna 232.

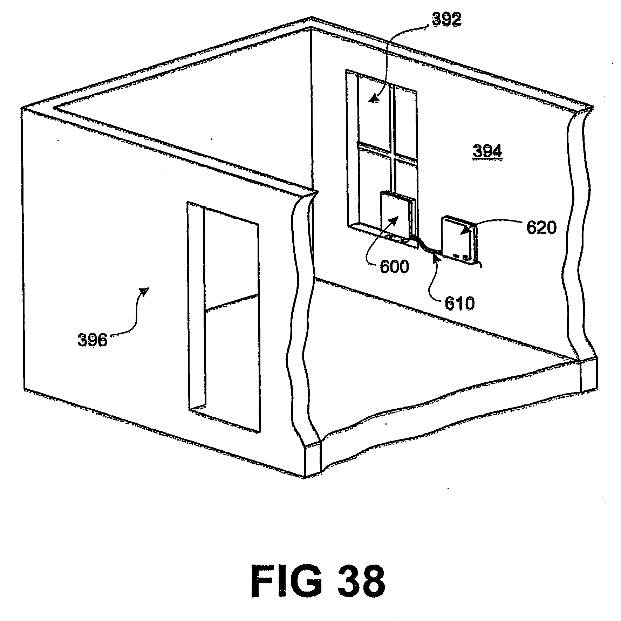

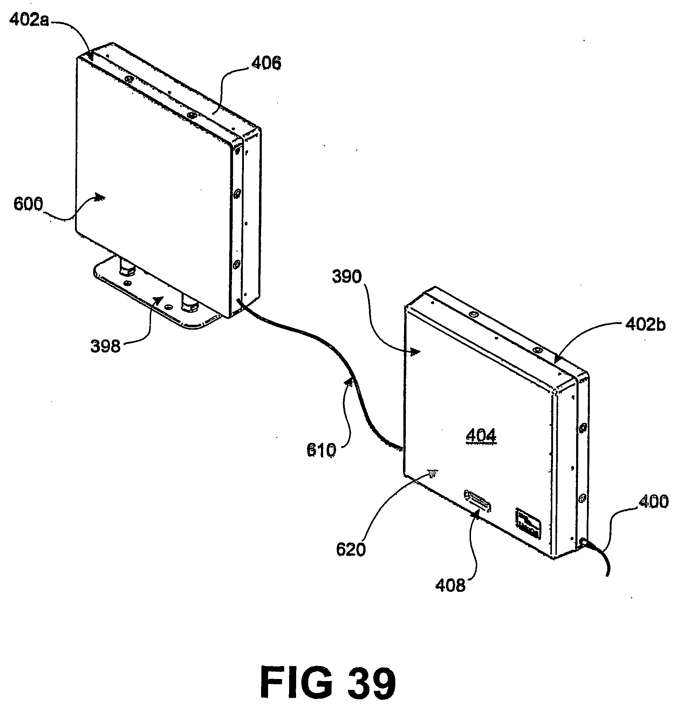

It is understood that variations in the arrangements of the server and donor antenna arrays can be used to support the signal enhancement function. As an example, an arrangement having a first radiating element spacing value in the server antenna array and a second radiating element spacing value in the donor antenna array can be used. As a second example, the server antenna elements can be positioned with a lateral distance or displacement relative to the donor antenna elements and achieve the desired isolation between the donor and server antenna arrays. Shifting the antenna arrays to include a lateral displacement between the server and donor antenna will result in a larger overall package size of the signal enhancer. One other possible variation is the donor antenna and the server antenna can have a separation distance greater than the unit size of either antenna array and are interconnected with one or more transmission lines such as a coaxial cable as is depicted in Fig. 38 and 39.

Referring now to Fig. 38, an enhancer unit constructed in accordance with an alternative exemplary embodiment has portions 600, 610, and 620 mounted in a window 392 in a wall 394 of a partially illustrated building structure 396. The unit 600 including the donor antenna generally will be placed adjacent to or mounted in a window, since the window 392 generally is the area of greatest RF frequency transmission into and out of a building structure. The unit 620 including the server antenna can be placed at a separate location that can be nearby unit 600 or located at a distance less than thirty (30) feet relative to unit 600 and typically within the same room of an indoor space. The unit 600 and the unit 620 are connected with a RF transmission line assembly 610 supporting two (2) independent RF signal paths.

An enlarged view of the alternate embodiment having portions 600, 610, and 620 is illustrated in Fig. 39. The alternate embodiment can comprise separate portions 600 and 620 interconnected with a RF transmission line assembly 610. The alternate embodiment can be a unit 390 (Fig. 25) having detachable portions 600 and 620 interconnected with a RF transmission line assembly 610. One or both of the portions 600 and 620 can be mounted in or to a structure utilizing a mounting stand 398. The alternate embodiment can have one or more handles 524 (Fig. 35) and freestanding pedestals 520 (Fig. 35).

The alternate embodiment having portions 600, 610, and 620 can include a conventional power cable 400, which can be plugged into the conventional power outlet (not illustrated) or battery source by the user to power up and initialize the unit. The portion 600 has a support structure 402a which supports an outer front server side radome 404 that is a dielectric material and the other elements of the portion 600. The portion 620 has a support structure 402b and a back donor side radome 406 that is a dielectric material and the other elements of the portion 620. The front radome 404 can include a visual indicating array 408 of LED's or other optical indicators, such as a liquid crystal display. In one variation of an alternate embodiment having detachable portions 600, 610, and 620, the support frames 402a and 402b can be attached to one another through one or more attachments or fasteners (not illustrated) resulting in an assembled unit 390 (Fig. 25).

In view of the foregoing, it will be understood that the donor antenna or the server antenna can be separated from an exemplary embodiment of the portable signal extension unit to facilitate an installation in which an antenna is positioned in a location separate from the extension unit. For this installation, the antenna is typically connected to the electronic circuitry of the extension unit by cabling, typically coaxial or fiber optic cabling, for carrying signals between the antenna and the extension unit. To provide a user with installation flexibility, the antenna can be removably attached to the housing of the extension unit to allow a user to install the antenna separate from the housing or attached to the housing, dependent upon the installation application. For example, conventional brackets can be used to attach the antenna to the housing for movement of signal extension unit from one location to another location. The user can then unlatch these brackets, remove the antenna from the housing, and install the antenna in a position separate from the exemplary extension unit.

While the invention has been described in several exemplary embodiments, those skilled in the art will readily appreciate that many modifications, additions and deletions can be made to the invention as described and disclosed without departing from the scope of the present invention.

## Claims

1. A signal enhancer (170, 230) for extending service coverage in a wireless communication system to at least one wireless communications device in an area of limited coverage from a base station (150), comprising:
a bi-directional amplifier (178, 188) comprising an amplifying downlink signal path (176, 236) for generating an amplified base station signal in response to a base signal and an amplifying uplink signal path (186, 274) for generating an amplified user signal in response to a user signal from the wireless communications device;
a donor dual polarized antenna (172, 232), coupled to the bi-directional amplifier, comprising a first donor polarized portion (174, 234) having a first polarization state and a second donor polarized portion (190, 288) having a second polarization state orthogonal to the first polarization state; and
a server dual polarized antenna (180, 252), coupled to the bi-directional amplifier, comprising a first server polarized portion (182, 254) having the second polarization state and a second server polarized portion (184, 270) having the first polarization state,
wherein the downlink signal path (176) is coupled between the first donor polarized portion (174, 234) and the first server polarized portion (182, 254); and
wherein the uplink signal path (186) is coupled between the second donor polarized portion (190,288) and the second server polarized portion (184, 270).

2. The enhancer (170, 230) defined in claim 1, wherein both of the signal paths (176, 186) are contained in a user portable unit and the bi-directional amplifier (178, 188) further comprises a variable gain control system for adjusting the gain of each signal path in response to detection of varying signal levels.

3. The enhancer (170, 230) defined in claim 2, wherein the variable gain control system is operative to increase the gain on both of the paths until a predetermined operating signal level is achieved or a maximum predetermined gain level has been achieved on the downlink signal path when power is applied to the unit.

4. The enhancer (170, 230) defined in claim 3, wherein the variable gain control system is operative to monitor the output power level of at least the downlink signal path (176, 236) and to decrease the power level for both of said the signal paths if the output power level exceeds a predetermined limit.

5. The enhancer (170, 230) defined in claim 3, wherein the variable gain control system is operative to monitor the output power level of at least the uplink signal path (186, 274) and to decrease the power level for the uplink signal path if the output power level exceeds a predetermined limit.

6. The enhancer (170, 230) defined in claim 2, wherein the variable gain control system is operative to monitor the output power level of the downlink signal path (176, 236) and to decrease the power level for both of the signal paths if the output power level exceeds a predetermined limit, the variable gain control being further operative to monitor the output power level of the uplink signal path (186, 274) and to decrease the power level for the uplink signal path if the output power level exceeds a predetermined limit.

7. The enhancer (170, 230) defined in claim 1 further comprising a mounting stand (398) for mounting the unit in an appropriate location in relation to receipt of the base station signal from the base station (150).

8. The enhancer (170, 230) of claim 1 wherein:
the donor dual polarized antenna (172, 232) comprises an array of donor antenna elements (206, 207, 208, 209);
the first donor polarized portion (174, 234) comprises at least one downlink antenna feed element associated with each donor antenna element;
the second donor polarized portion (190, 288) comprises at least one uplink antenna feed element associated with each donor antenna element;
the server dual polarized antenna (180, 252) comprises an array of server antenna elements;
the first server polarized portion (182, 254) comprises at least one downlink antenna feed element associated with each server antenna element; and
the second server polarized portion (184, 270) comprises at least one uplink feed element associated with each server antenna element.

9. The enhancer defined in claim 2 further comprising a free-standing mounting stand (398) for mounting the enhancer in an appropriate location relative to receipt of the base station signal from the base station.

10. The enhancer defined in claim 1 wherein the antennas are located in a back-to-back arrangement adjacent one another.

11. The enhancer defined in claim 1, wherein each of the antennas comprise an antenna array having a plurality of patch radiators.

12. The enhancer defined in claim 11, wherein each of the antennas further comprise a parasitic patch antenna array spaced from each of the array antennas to increase the bandwidth of the antennas.

13. The enhancer defined in claim 1, wherein the bi- directional amplifier further comprises at least one bandpass filter in each of the uplink and the downlink signal paths, the filters having a transmission zero near a signal crossover for increasing the isolation between the signal paths.

14. A portable signal enhancer for extending service coverage in a wireless communications system, comprising:
a housing having a pair of oppositely facing surfaces and a size and weight that supports movement of the housing by hand from a first location to a second location; and
the signal enhancer of claim 1,
wherein the donor dual polarized antenna (172, 232) is mounted to one of the surfaces the a server dual polarized antenna (180, 252) is mounted to the other surface and the bi-directional amplifier (178, 188) is mounted within the housing.

## Patentansprüche

1. Signalenhancer bzw. Verstärker (170, 230) zum Erweitern der Dienstabdeckung in einem drahtlosen Kommunikationssystem für zumindest eine drahtlose Kommunikationsvorrichtung auf einem Gebiet begrenzter Abdeckung von einer Basisstation (150) mit:
einem bidirektionalen Verstärker (178, 188) mit einem verstärkenden Downlinksignalweg bzw. -pfad (176, 236) zur Erzeugung eines verstärkten Basisstationssignals in Antwort auf ein Basissignal und einem verstärkenden Uplinksignalweg bzw. -pfad (186, 274) zur Erzeugung eines verstärkten Benutzersig-nals in Antwort auf ein Benutzersignal von der drahtlosen Kommunikationsvorrichtung;
eine an den bidirektionalen Verstärker gekoppelte Donator-dual-polarisierten-Antenne (172, 232) mit einem ersten Donator-polarisierten-Abschnitt (174, 234), der einen ersten Polarisationszustand aufweist, und einem zweiten Donator-polarisierten-Abschnitt (190, 288), der einen zweiten Polarisationszustand senkrecht zu dem ersten Polarisationszustand aufweist; und
eine an den bidirektionalen Verstärker gekoppelte Server-dual-polarisierte-Antenne (180, 252) mit einem ersten Server-polarisierten Abschnitt (182, 254), der den zweiten Polarisationszustand aufweist, und einem zweiten Server-polarisierten Abschnitt (184, 270), der den ersten Polarisationszustand aufweist,
wobei der Downlinksignalweg (176) zwischen dem ersten Donator-polarisierten Abschnitt (174, 234) und dem ersten Server-polarisierten Abschnitt (182, 254) gekoppelt ist; und
wobei der Uplinksignalweg (186) zwischen dem zweiten Donator-polarisierten Abschnitt (190, 288) und dem zweiten Server-polarisierten Abschnitt (184, 270) gekoppelt ist.

2. Enhancer (170. 230) nach Anspruch 1, wobei beide von den Signalwegen (176, 186) in einer für einen Benutzer tragbaren Einheit enthalten sind und der bidirektionale Verstärker (178, 188) außerdem ein variables Verstärkungssteuerungs- bzw. -regelungssystem zum Einstellen der Verstärkung für jeden Signalweg in Antwort auf eine Detektion von schwankenden Signalhöhen bzw -pegeln umfasst,

3. Enhancer (170, 230) nach Anspruch 2, wobei das variable Verstärkungssteuerungs- bzw. -regelungssystem betriebsfähig ist zur Erhöhung der Verstärkung auf beiden der Wege bzw. Strecken, bis eine vorbestimmte Betriebssignalhöhe erzielt ist oder ein maximaler vorbestimmter Verstärkungsgrad auf dem Downlinksignalweg erreicht wurde, wenn Leistung bzw. Strom an die Anlage angelegt wird.

4. Enhancer (170, 230) nach Anspruch 3, wobei das variable Verstärkungssteuerungs- bzw. -regelungssystem betriebsfähig ist zur Verfolgung der Ausgangsleistungshöhe von zumindest dem Downlinksignalweg (176, 236) und zum Vermindern der Leistungshöhe für beide von den Signalwegen, wenn die Ausgangsleistungshöhe bzw. -pegel eine vorbestimmte Grenze überschreitet.

5. Enhancer (170, 230) nach Anspruch 3, wobei das variable Verstärkersteuerungs- bzw. -regelungssystem betriebsfähig ist zur Verfolgung der Ausgangsleistungshöhe von zumindest dem Uplinksignalweg (186, 274) und zum Vermindern der Leistungshöhe für den Uplinksignalweg, wenn die Ausgangsleistungshöhe eine vorbestimmte Grenze überschreitet,

6. Enhancer (170, 230) nach Anspruch 2, wobei das variable Verstärkungssteuerungs- bzw -regelungssystem betriebsfähig ist zur Verfolgung der Ausgangsleistungshöhe von dem Downlinksignalweg (176, 236) und zum Vermindern der Leistungshöhe für beide von den Signalwegen, wenn die Ausgangsleistungshöhe eine vorbestimmte Grenze überschreitet,
wobei die variable Verstärkungssteuerung bzw. -regelung außerdem betriebsfähig ist zur Verfolgung der Ausgangsleistungshöhe von dem Uplinksignalweg (186, 274) und zum Vermindern der Leistungshöhe für den Uplinksignalweg, wenn die Ausgangsleistungshöhe eine vorbestimmte Grenze überschreitet.

7. Enhancer (170, 230) nach Anspruch 1, der außerdem einen Montageständer bzw. -gestell (398) zum Befestigen der Anlage an einem geeigneten Ort in Bezug auf den Empfang von dem Basisstationssignal von der Basisstation (150) umfasst.

8. Enhancer (170, 230) nach Anspruch 1, wobei:
die Donator-dual-polarisierte Antenne (172, 232) ein Array bzw. Feld von Donator-Antennenelementen (206, 207, 208, 209) umfasst;
der erste Donator-polarisierte Abschnitt (174, 234) zumindest ein Downlinkantenneneinspetsungseiement zugehörig zu bzw. assoziiert mit jedem Donator-Antennenelement umfasst;
der zweite Donator-polarisierte Abschnitt (190, 288) zumindest ein Uplinkantenneneinspeisungselement zugehörig zu bzw, assoziiert mit jedem Donator-Antennenelement umfasst;
die Server-dual-polarisierte Antenne (180, 252) ein Array bzw Feld von Server-Antennenelementen umfasst;
der erste Server-polarisierte Abschnitt (182, 254) zumindest ein Downlinkantenneneinspeisungselement zugehörig zu bzw. assoziiert mit jedem Server-Antennenelement umfasst; und
der zweite Server-polarisierte Abschnitt (184, 270) zumindest ein Uplinkeinspeisungselement zugehörig zu bzw. assoziiert mit jedem Serverantennenelement umfasst.

9. Enhancer nach Anspruch 2, der außerdem einen freistehenden Montageständer bzw. -gestell (398) zum Befestigen des Enhancers an einem geeigneten Ort in Bezug auf den Empfang des Basisstationssignals von der Basisstation umfasst.

10. Enhancer nach Anspruch 1, wobei die Antennen in Rücken-zu-Rücken-Anordnung benachbart zueinander angeordnet sind.

11. Enhancer nach Anspruch 1, wobei jede von den Antennen ein AntennenArray mit einer Mehrahl von Patch-Radiatoren umfasst.

12. Enhancer nach Anspruch 11, wobei jede von den Antennen außerdem ein parasitäres Patch-Antennenarray, beabstandet von jeder der Array-Antennen, umfasst, um die Bandbreite der Antennen zu erhöhen.

13. Enhancer nach Anspruch 1, wobei der bidirektionale Verstärker außerdem zumindest einen Bandpassfilter in jedem von den Uplink- und den Downlinksignalwegen umfasst, wobei die Filter eine Transmission Null nahe einer Signalüberschneidung zum Erhöhen der Isolation zwischen den Signalwegen aufweisen.

14. Tragbarer Signalenhancer zum Erweitern der Dienstabdeckung in einem drahtlosen Kommunikationssystem mit:
einem Gehäuse, das ein Paar von gegenüberstehenden Flächen und eine Größe und ein Gewicht aufweist, die eine Bewegung des Gehäuses mit der bzw. per Hand von einem ersten Ort zu einem zweiten Ort unterstützen, und
dem Signalenhancer von Anspruch 1,
wobei die Donator-dual-polarisierte Antenne (172, 232) an einer der Oberflächen bzw. Flächen montiert ist die Server-dual-polarisierten Antenne (180, 252) an der anderen Oberfläche bzw. Fläche befestigt bzw. montiert ist und der bidirektionale Verstärker (178, 188) in dem Gehäuse befestigt bzw. montiert ist.

## Revendications

1. Rehausseur de signal (170, 230) pour étendre la couverture de service dans un système de communication sans fil vers au moins un dispositif de communication sans fil dans une zone de couverture limitée à partir d'une station de base (150), comprenant :
un amplificateur bidirectionnel (178, 188) comprenant un chemin amplificateur de signal de liaison descendante (176, 236) pour générer un signal de station de base amplifié en réponse à un signal de base et un chemin amplificateur de signal de liaison montante (186, 274) pour générer un signal utilisateur amplifié en réponse à un signal utilisateur à partir du dispositif de communication sans fil ;
une antenne donneur à double polarisation (172, 232), couplée à l'amplificateur bidirectionnel, une première partie donneur polarisée (174, 234) ayant un premier état de polarisation et une seconde partie donneur polarisée (190, 288) ayant un second état de polarisation orthogonal au premier état de polarisation ; et
une antenne serveur à double polarisation (180, 252) couplée à l'amplificateur bidirectionnel, comprenant une première partie serveur polarisée (182,254) ayant le second état de polarisation et une seconde partie serveur polarisée (184, 270) ayant le premier état de polarisation,
dans lequel le chemin de signal de liaison descendante (176) est couplé entre la première partie donneur polarisée (174, 234) et la première partie serveur polarisée (182, 254) ; et dans lequel le chemin de signal de liaison montante (186) est couplé entre la seconde partie donneur polarisée (190,288) et la seconde partie serveur polarisée (184, 270).

2. Rehausseur (170, 230) selon la revendication 1, dans lequel les deux chemins de signal (176, 186) sont contenus dans un élément portatif utilisateur et l'amplificateur bidirectionnel (178,188) comprend en outre un système de commande de puissance variable pour ajuster la puissance de chaque chemin de signal en réponse à la détection de niveaux variables de signal.

3. Rehausseur (170, 230) selon la revendication 2, dans lequel le système de commande de puissance variable fonctionne pour augmenter la puissance sur les deux chemins jusqu'à ce qu'un niveau de signal de fonctionnement prédéterminé soit obtenu ou qu'un niveau de puissance maximum prédéterminé soit obtenu sur le chemin de signal de liaison descendante quand on applique la puissance à l'élément.

4. Rehausseur (170, 230) selon la revendication 3, dans lequel le système de commande de puissance variable fonctionne pour contrôler le niveau de puissance de sortie d'au moins le chemin de signal de liaison descendante (176, 236) et pour diminuer le niveau de puissance des deux dits chemin de signal si le niveau de puissance de sortie dépasse une limite prédéterminée.

5. Rehausseur (170, 230) selon la revendication 3, dans lequel le système de commande de puissance variable fonctionne pour contrôler le niveau de puissance de sortie d'au moins le chemin de signal de liaison montante (186, 274) et pour diminuer le niveau de puissance du chemin de signal de liaison montante si le niveau de puissance de sortie dépasse une limite prédéterminée.

6. Rehausseur (170, 230) selon la revendication 2, dans lequel le système de commande de puissance variable fonctionne pour contrôler le niveau de puissance de sortie du chemin de signal de liaison descendante (176, 236) et pour diminuer le niveau de puissance des deux dits chemin de signal si le niveau de puissance de sortie dépasse une limite prédéterminée, la commande de puissance variable fonctionnant en outre pour contrôler le niveau de puissance de sortie du chemin de signal de liaison montante (186, 274) et pour diminuer le niveau de puissance du chemin de signal de liaison montante si le niveau de puissance de sortie dépasse une limite prédéterminée.

7. Rehausseur (170, 230) selon la revendication 1, comprenant en outre un support de montage (398) pour monter l'élément sur un emplacement approprié en rapport avec la réception du signal de station de base à partir de la station de base (150).

8. Rehausseur (170, 230) selon la revendication 1 dans lequel :
l'antenne donneur à double polarisation (172, 232) comprend un réseau d'éléments d'antenne donneur (206, 207, 208, 209);
la première partie donneur polarisée (174, 234) comprend au moins un élément d'alimentation d'antenne à liaison descendante associé à chaque élément d'antenne donneur ;
la seconde partie donneur polarisée (190, 288) comprend au moins un élément d'alimentation d'antenne à liaison montante associée à chaque élément d'antenne donneur ;
l'antenne serveur à double polarisation (180, 252) comprend un réseau d'éléments d'antenne serveur ;
la première partie serveur polarisée (182, 254) comprend au moins un élément d'alimentation d'antenne à liaison descendante associé à chaque élément d'antenne serveur ; et
la seconde partie serveur polarisée (184, 270) comprend au moins un élément d'alimentation d'antenne à liaison montante associé à chaque élément d'antenne serveur.

9. Rehausseur selon la revendication 2, comprenant en outre un support de montage sur pied (398) pour monter le rehausseur sur un emplacement approprié en rapport avec la réception du signal de station de base à partir de la station de base.

10. Rehausseur selon la revendication 1, dans lequel les antennes sont situées dans une disposition dos*-*à-dos adjacentes l'une à l'autre.

11. Rehausseur selon la revendication 1, dans lequel chacune des antennes comprend un ensemble d'antennes ayant une pluralité de radiateurs en plaque.

12. Rehausseur selon la revendication 11, dans lequel chacune des antennes comprend en outre un réseau d'antennes passives espacé de chacune des antennes réseaux pour augmenter la bande passante des antennes.

13. Rehausseur selon la revendication 1, dans lequel l'amplificateur bidirectionnel comprend en outre au moins un filtre à bande passante dans chacun des chemins de signal de liaison montante et descendante, les filtres ayant une transmission zéro près d'un signal séparateur pour augmenter l'isolation entre les chemin de signal.

14. Rehausseur de signal portatif pour étendre la couverture du service dans un système de communication sans fil, comprenant :
un logement ayant deux surfaces se faisant face de manière opposée et une taille et un poids qui supportent le mouvement manuel du logement d'un premier emplacement vers un second emplacement ; et
le rehausseur de signal de la revendication 1,
dans lequel l'antenne donneur à double polarisation (172, 232) est montée sur l'une des surfaces, l'antenne serveur à double polarisation (180, 252) est montée sur l'autre surface et l'amplificateur bidirectionnel (178, 186) est monté à l'intérieur du logement.
